# EUROPEAN PATENT APPLICATION

(11) **EP 4 016 429 A1**
(43) Date of publication of application: **22.06.2022**
(21) Application number: 19942166.0
(22) Date of filing: 16.08.2019
(51) Int. Cl.: G06Q 20/40

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: KAWASE, Nobuaki, Tokyo 108-8001 (JP)
(74) Representative: Betten & Resch
(86) International application number: PCT/JP2019/032169
(87) International publication number: WO 2021/033219

(57) **Abstract**

Provide are an information processing system, an information processing method, and a storage medium that can efficiently register a plurality of pieces of biometric information capable of realizing highly accurate biometric authentication. An information processing system includes: a registration unit that registers a first biometric information acquired by a first terminal; and an acquisition unit that acquires a target biometric information to be matched with the first biometric information, wherein the registration unit registers a second biometric information acquired by a second terminal different from the first terminal when the target biometric information is acquired in association with the first biometric information according to matching result of the target biometric information with the first biometric information.

## Description

### [Technical Field]

This disclosure relates to an information processing system, an information processing method and a storage medium.

### [Background Art]

PTL 1 discloses a system including an iris registration terminal for registering iris information for authentication prior to use of an administrative procedure system. The iris registration terminal disclosed in PTL 1 compares a face image of a registrant imaged by an imaging apparatus with an image of a photograph of an identification card, and transmit, when it is determined that the person of the identification card and the registrant are the same person, iris registration information including iris information of the registrant to an administrative server. Further, in the system disclosed in PTL 1, authentication processing using iris information is performed in an administrative procedure that can be performed by a multipurpose terminal.

### [Citation List]

### [Patent Literature]

PTL 1: Japanese Patent Application Laid-Open No. 2006-048263
PTL 2: Japanese Patent Application Laid-Open No. 2005-242677

### [Summary of Invention]

### [Technical Problem]

However, in the system disclosed in PTL 1, when acquiring the iris information of the registrant, it is difficult to efficiently register the biometric information because the face image of the registrant is captured, the identification card is read, and the iris image is captured. Further, in the system disclosed in PTL 1, since only iris information, which is a single piece of biometric information, is registered as the biometric information used in the authentication process, it is difficult to realize highly accurate biometric authentication.

It is an example object of the present invention to provide an information processing system, an information processing method, and a storage medium that can efficiently register a plurality of pieces of biometric information capable of realizing highly accurate biometric authentication.

### [Solution to Problem]

According to one aspect of this disclosure, there is provided an information processing system including: a registration unit that registers a first biometric information acquired by a first terminal; and an acquisition unit that acquires a target biometric information to be matched with the first biometric information, wherein the registration unit registers a second biometric information acquired by a second terminal different from the first terminal when the target biometric information is acquired in association with the first biometric information according to matching result of the target biometric information with the first biometric information.

According to another aspect of this disclosure, there is provided an information processing method including: registering a first biometric information acquired by a first terminal; and acquiring a target biometric information to be matched with the first biometric information, wherein the registering registers a second biometric information acquired by a second terminal different from the first terminal when the target biometric information is acquired in association with the first biometric information according to matching result of the target biometric information with the first biometric information.

According to further another aspect of this disclosure, there is provided a storage medium storing a program that causes a computer to perform: registering a first biometric information acquired by a first terminal; and acquiring a target biometric information to be matched with the first biometric information, wherein the registering registers a second biometric information acquired by a second terminal different from the first terminal when the target biometric information is acquired in association with the first biometric information according to matching result of the target biometric information with the first biometric information.

### [Advantageous Effects of Invention]

According to this disclosure, it is possible to efficiently register a plurality of pieces of biometric information capable of realizing highly accurate biometric authentication.

### [Brief Description of Drawings]

[Fig. 1]

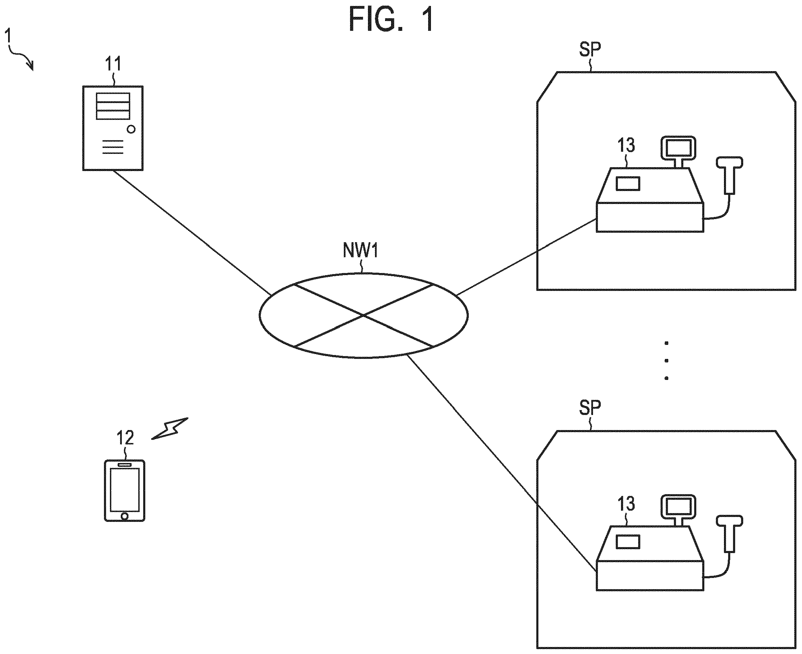

   Fig. 1 is a schematic diagram illustrating an overall configuration of an information processing system according to a first example embodiment of this disclosure.
[Fig. 2]

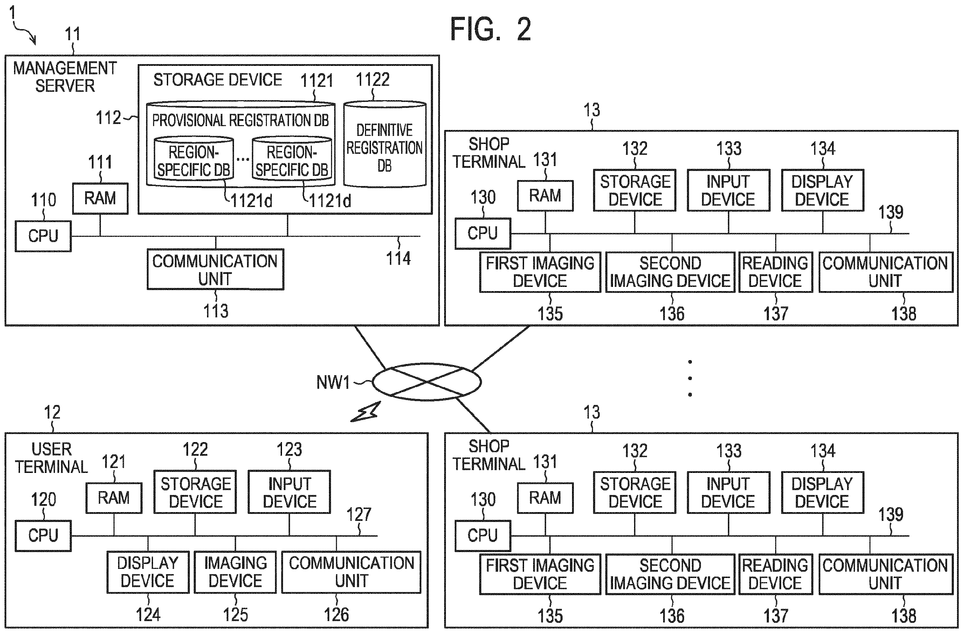

   Fig. 2 is a block diagram illustrating an example of a hardware configuration of the information processing system according to the first example embodiment of this disclosure.
[Fig. 3]

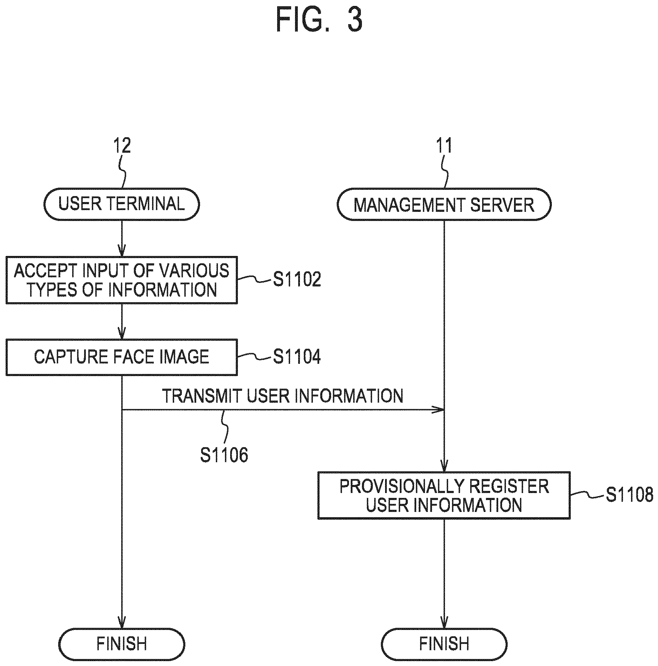

   Fig. 3 is a sequence diagram illustrating operations of a user terminal and a management server during a provisional registration processing in the information processing system according to the first example embodiment of this disclosure.
[Fig. 4]

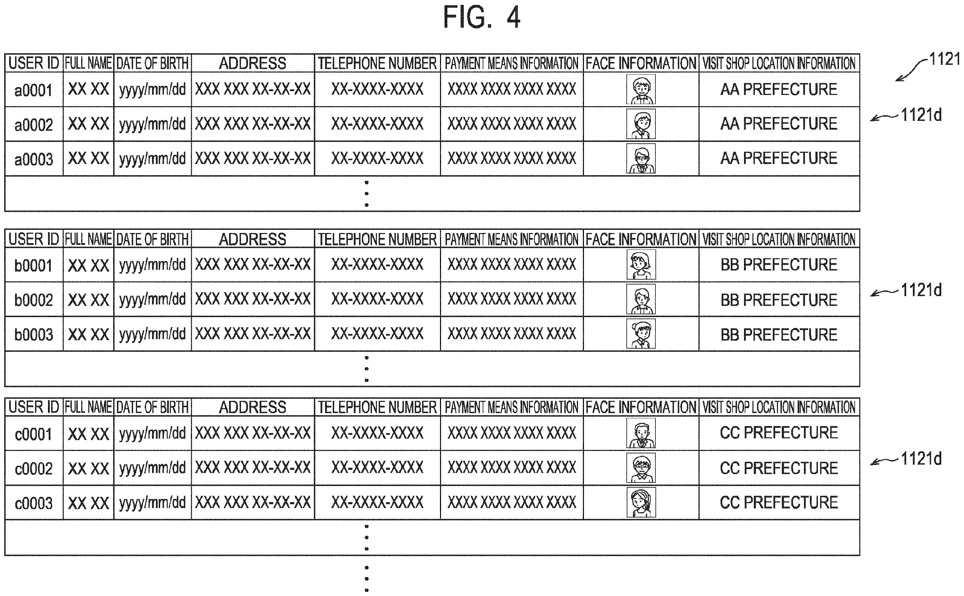

   Fig. 4 is a schematic diagram illustrating an example of a provisional registration database in the information processing system according to the first example embodiment of this disclosure.
[Fig. 5]

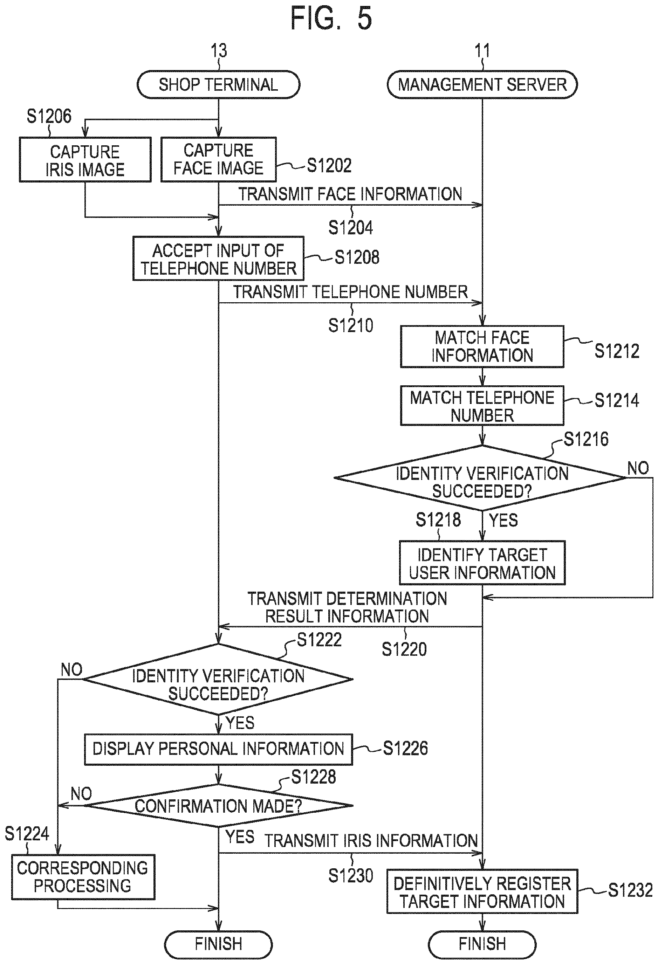

   Fig. 5 is a sequence diagram illustrating operations of a shop terminal and the management server during a definitive registration processing in the information processing system according to the first example embodiment of this disclosure.
[Fig. 6]

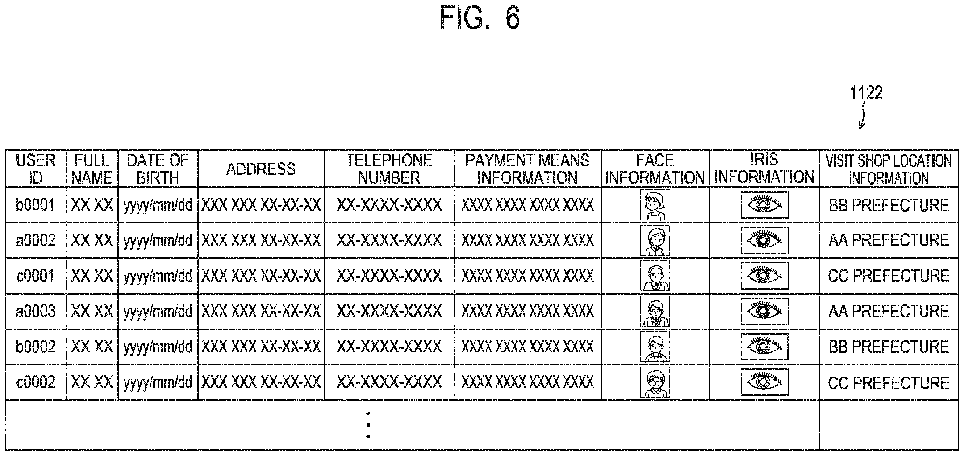

   Fig. 6 is a schematic diagram illustrating an example of a definitive registration database in the information processing system according to the first example embodiment of this disclosure.
[Fig. 7]

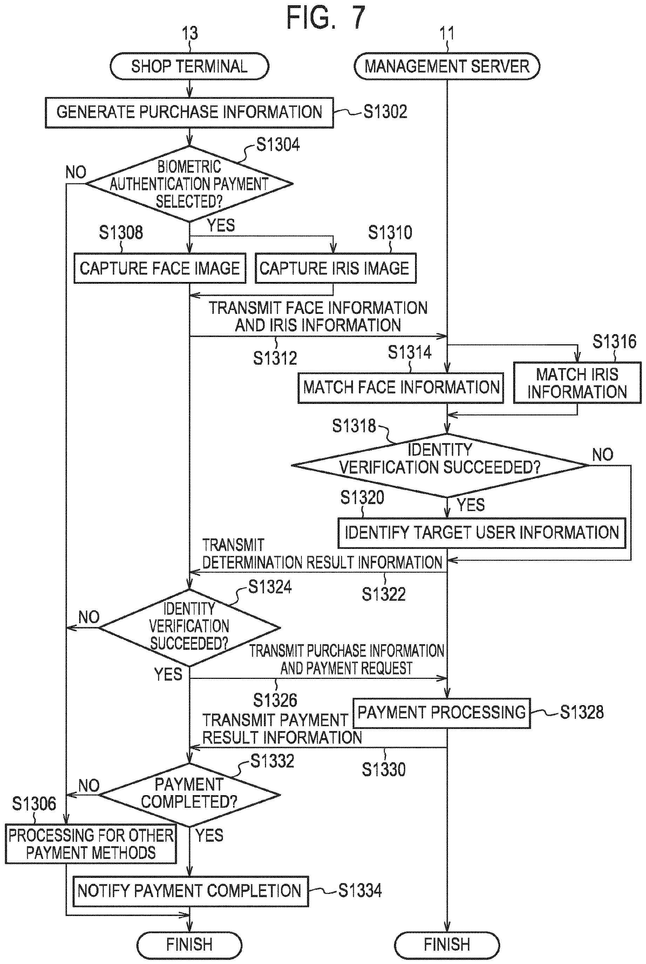

   Fig. 7 is a sequence diagram illustrating operations of the shop terminal and the management server during payment processing in an information processing system according to first example embodiment of this disclosure.
[Fig. 8]

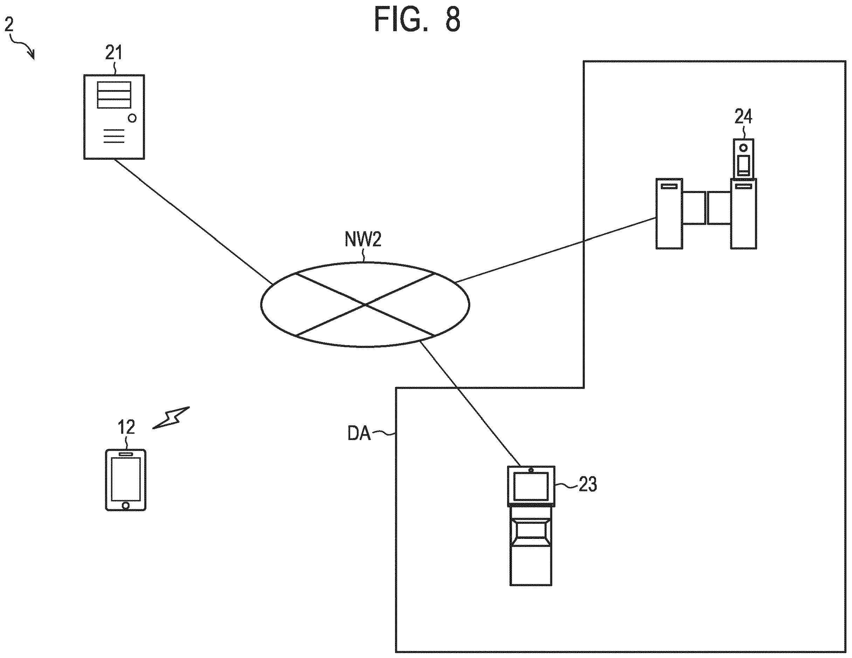

   Fig. 8 is a schematic diagram illustrating an overall configuration of an information processing system according to a second example embodiment of this disclosure.
[Fig. 9]

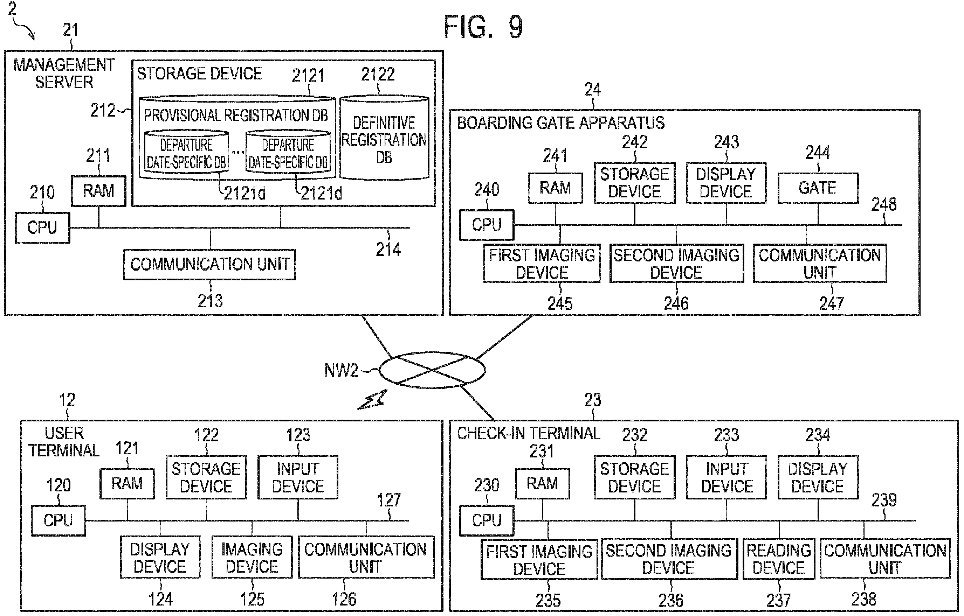

   Fig. 9 is a block diagram illustrating an example of a hardware configuration of the information processing system according to the second example embodiment of this disclosure.
[Fig. 10]

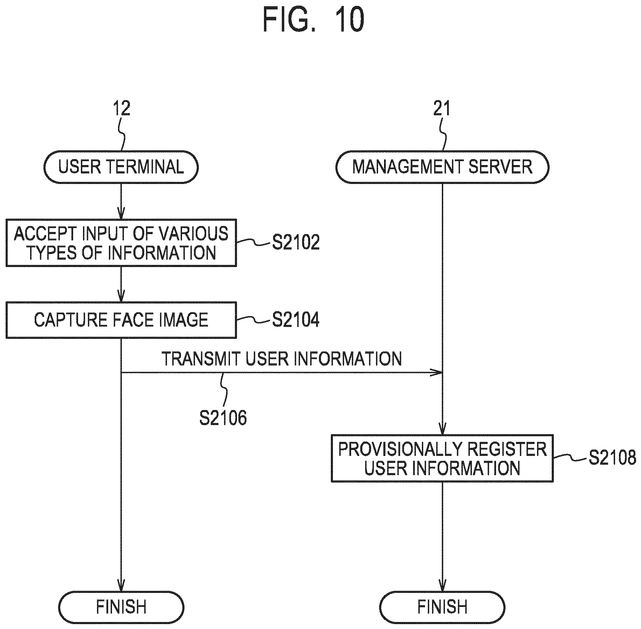

   Fig. 10 is a sequence diagram illustrating operations of a user terminal and a management server during a provisional registration processing in the information processing system according to the second example embodiment of this disclosure.
[Fig. 11]

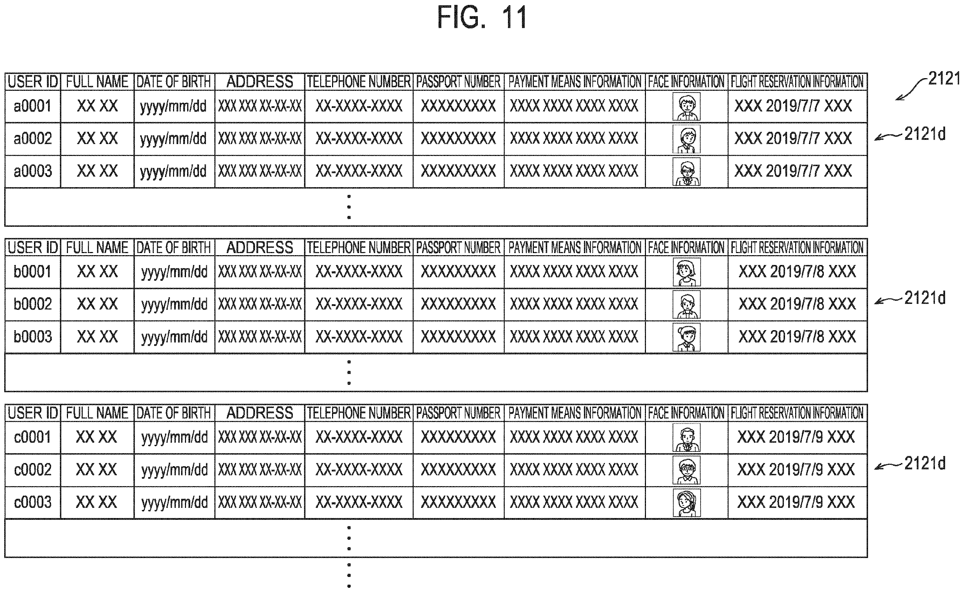

   Fig. 11 is a schematic diagram 11 illustrating an example of a provisional registration database in the information processing system according to the second example embodiment of this disclosure.
[Fig. 12]

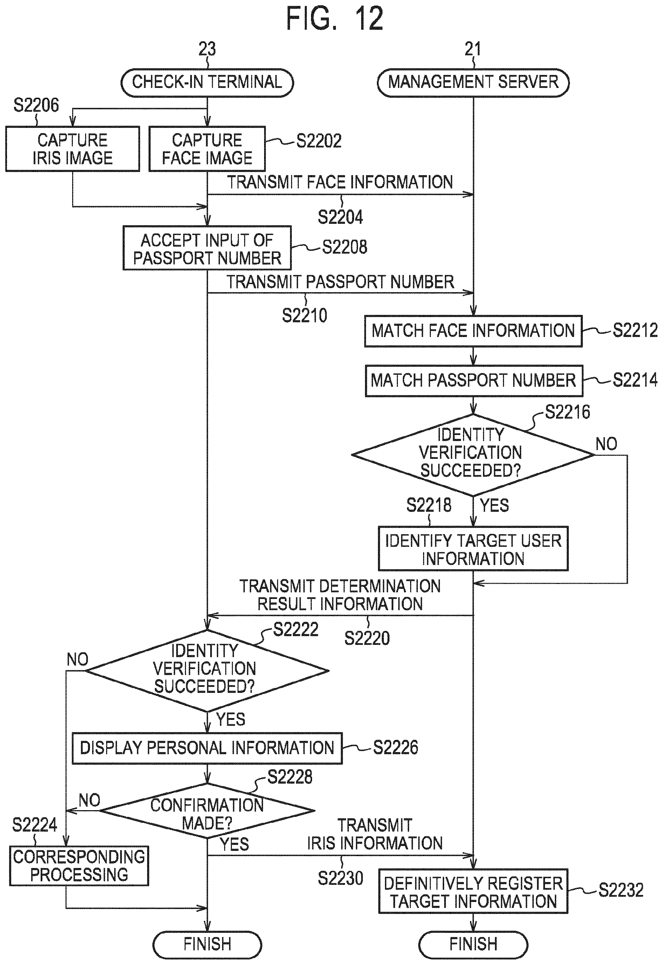

   Fig. 12 is a sequence diagram illustrating operations of a check-in terminal and the management server during a definitive registration processing in the information processing system according to the second example embodiment of this disclosure.
[Fig. 13]

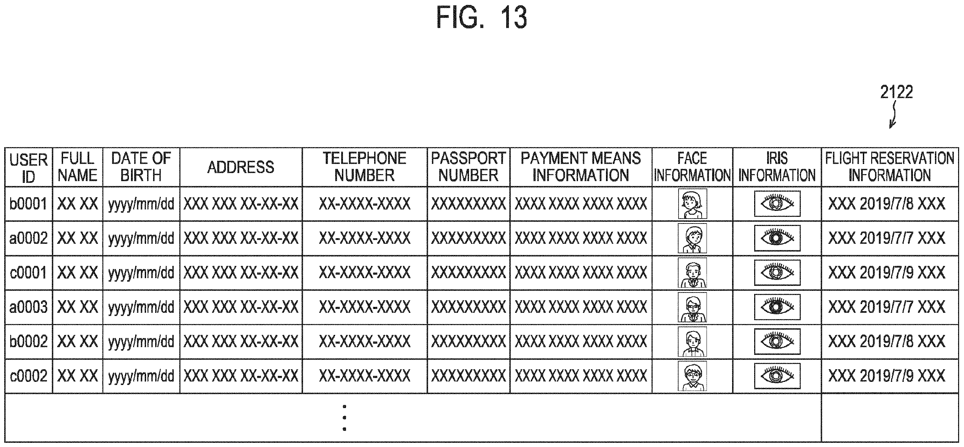

   Fig. 13 is a schematic diagram illustrating an example of a definitive registration database in the information processing system according to the second example embodiment of this disclosure.
[Fig. 14]

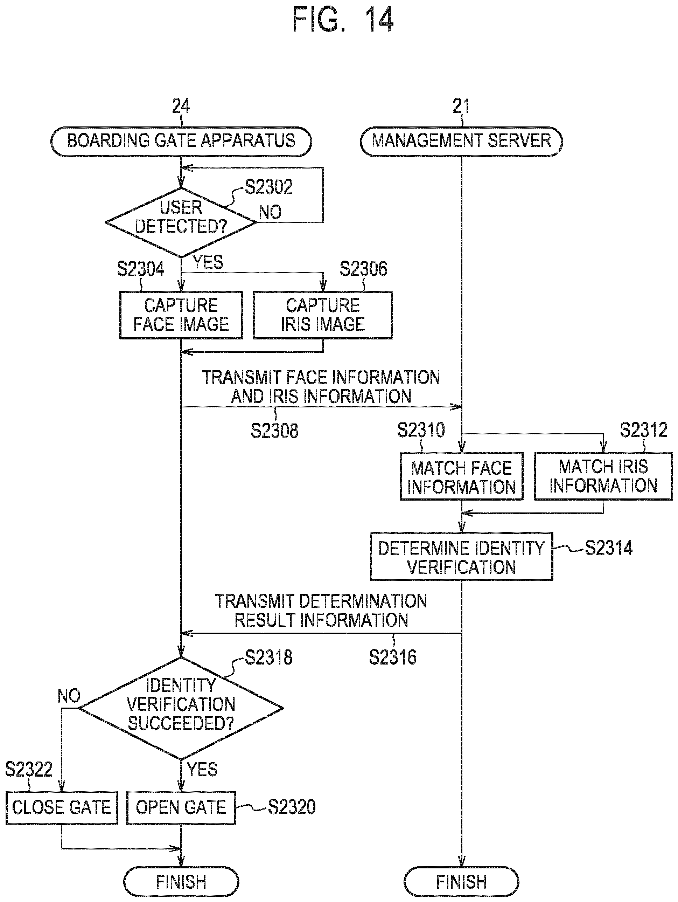

   Fig. 14 is a sequence diagram illustrating operations of a boarding gate apparatus and the management server during a boarding gate procedure in the information processing system according to the second example embodiment of this disclosure.
[Fig. 15]

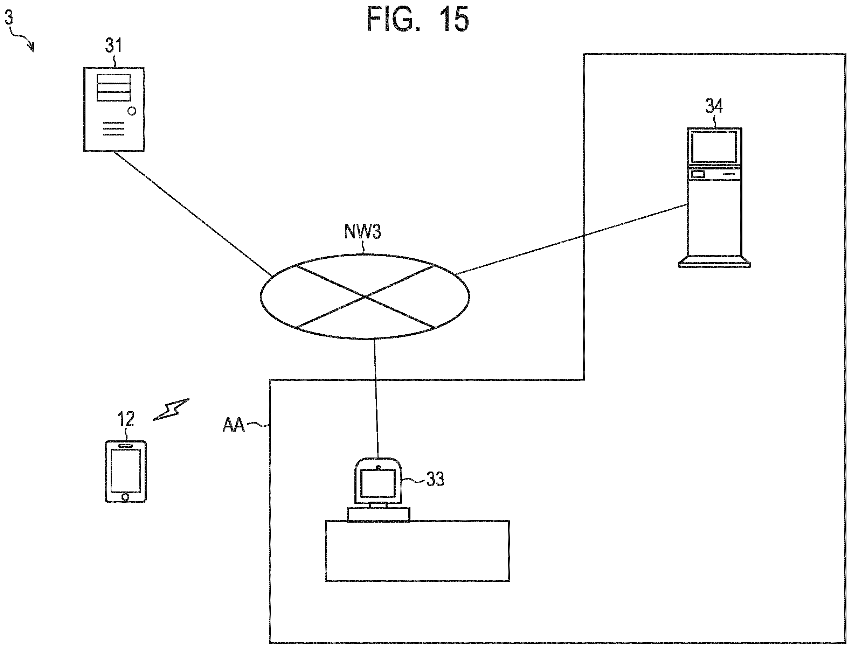

   Fig. 15 is a schematic diagram illustrating an overall configuration of an information processing system according to a third example embodiment of this disclosure.
[Fig. 16]

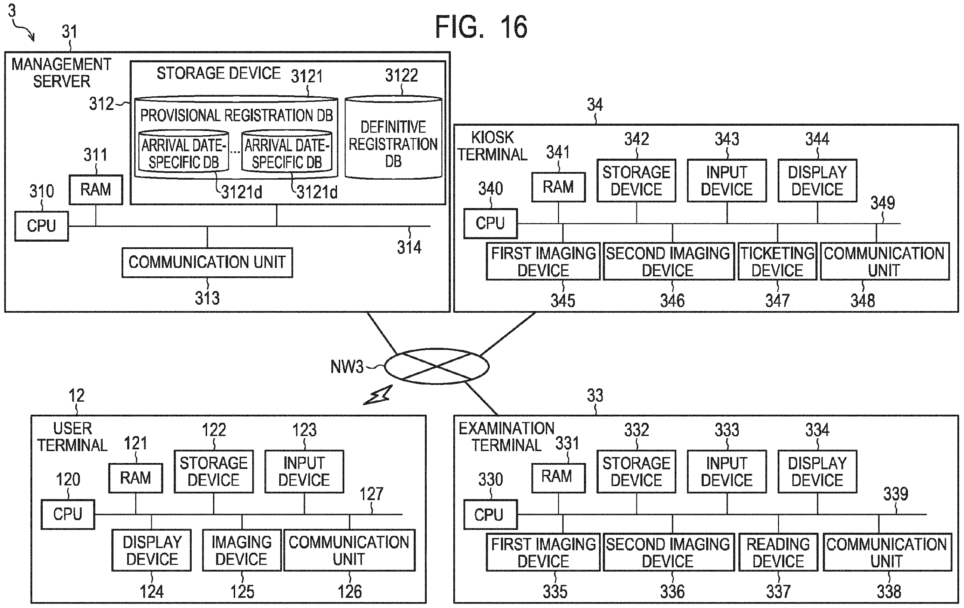

   Fig. 16 is a block diagram illustrating an example of a hardware configuration of the information processing system according to the third example embodiment of this disclosure.
[Fig. 17]

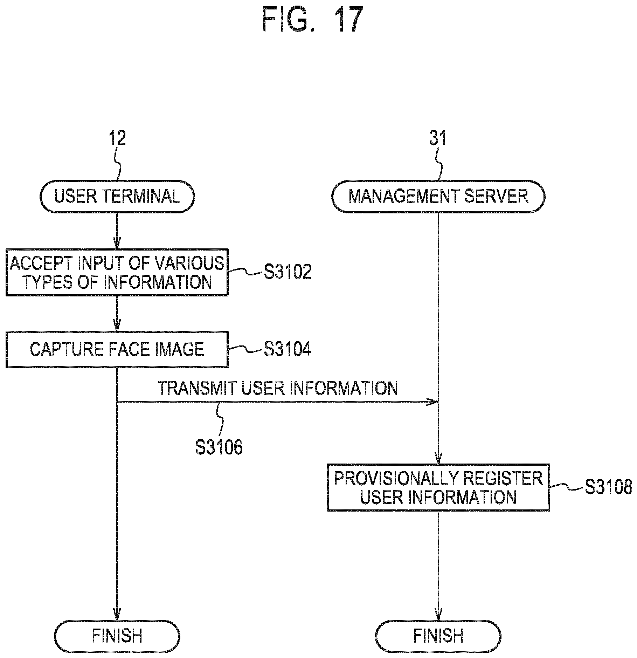

   Fig. 17 is a sequence diagram illustrating operations of a user terminal and a management server during a provisional registration processing in the information processing system according to the third example embodiment of to this disclosure.
[Fig. 18]

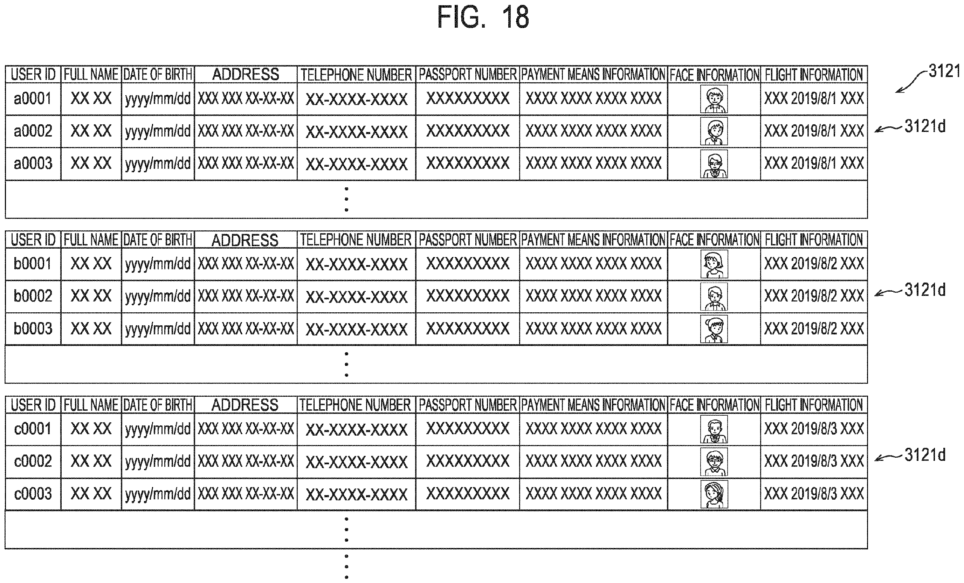

   Fig. 18 is a schematic diagram illustrating an example of a provisional registration database in the information processing system according to the third example embodiment of this disclosure.
[Fig. 19]

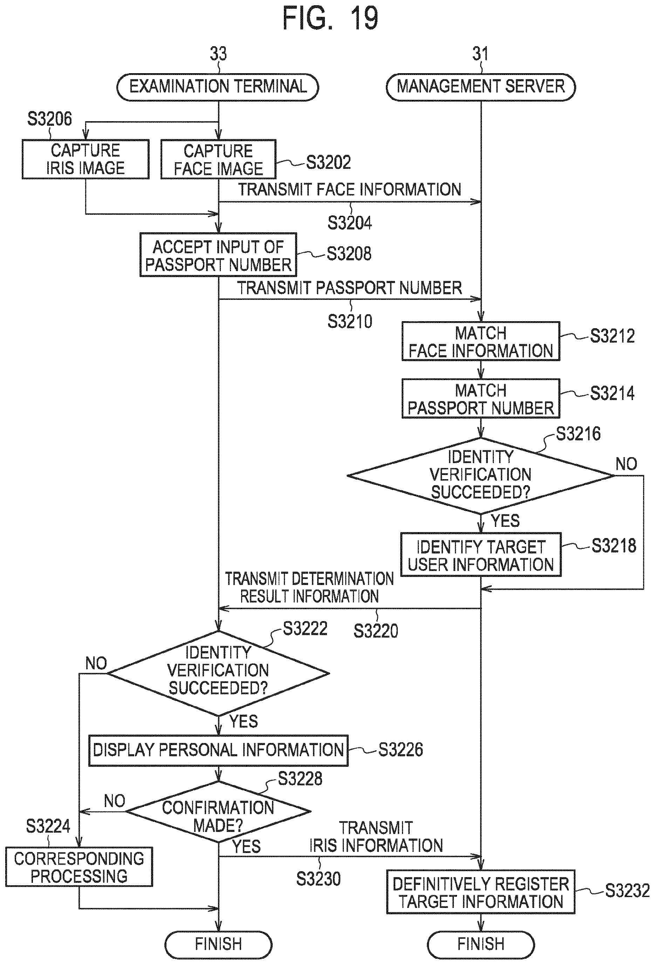

   Fig. 19 is a sequence diagram illustrating operations of an examination terminal and the management server during definitive registration processing in the information processing system according to the third example embodiment of this disclosure.
[Fig. 20]

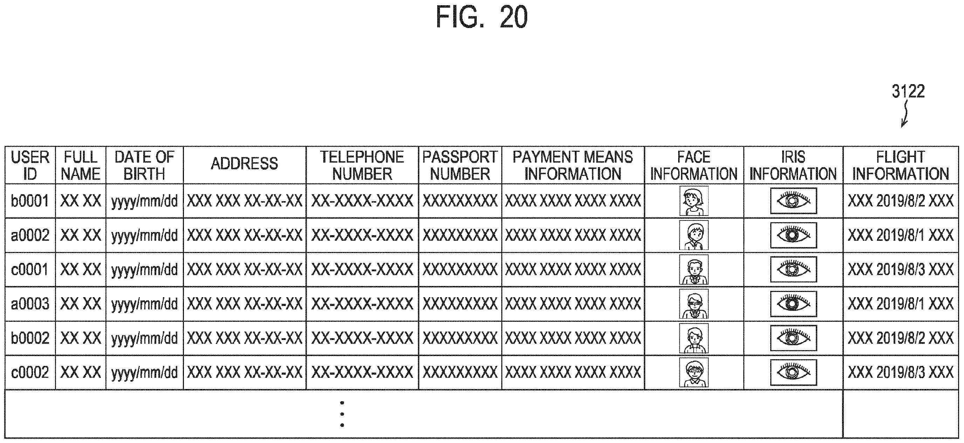

   Fig. 20 is a schematic diagram illustrating an example of a definitive registration database in the information processing system according to the third example embodiment of this disclosure.
[Fig. 21]

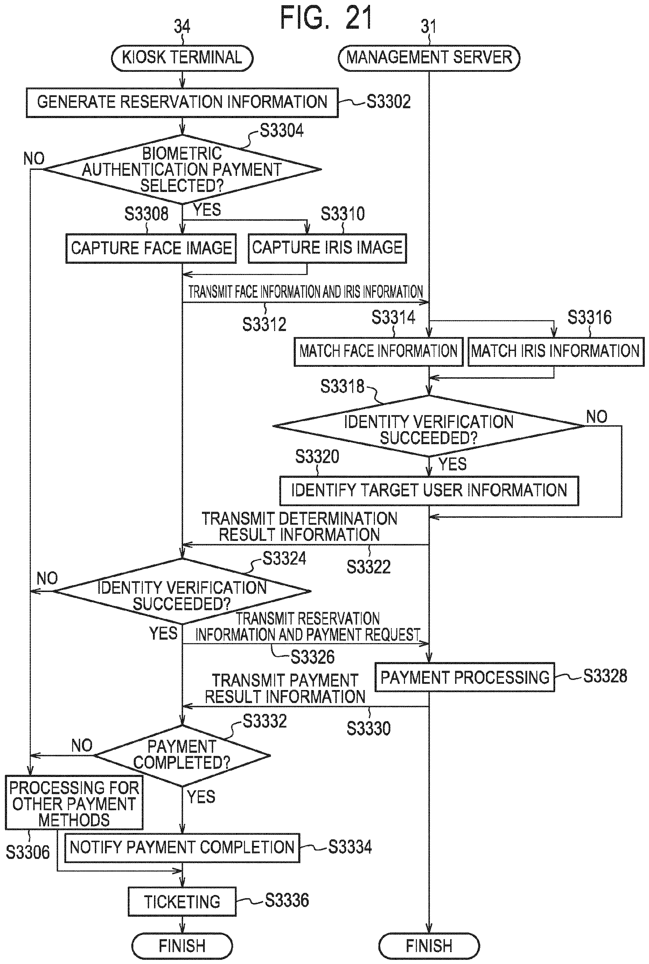

   Fig. 21 is a sequence diagram illustrating operations of a kiosk terminal and the management server during reservation and ticketing processing in the information processing system according to the third example embodiment of this disclosure.
[Fig. 22]

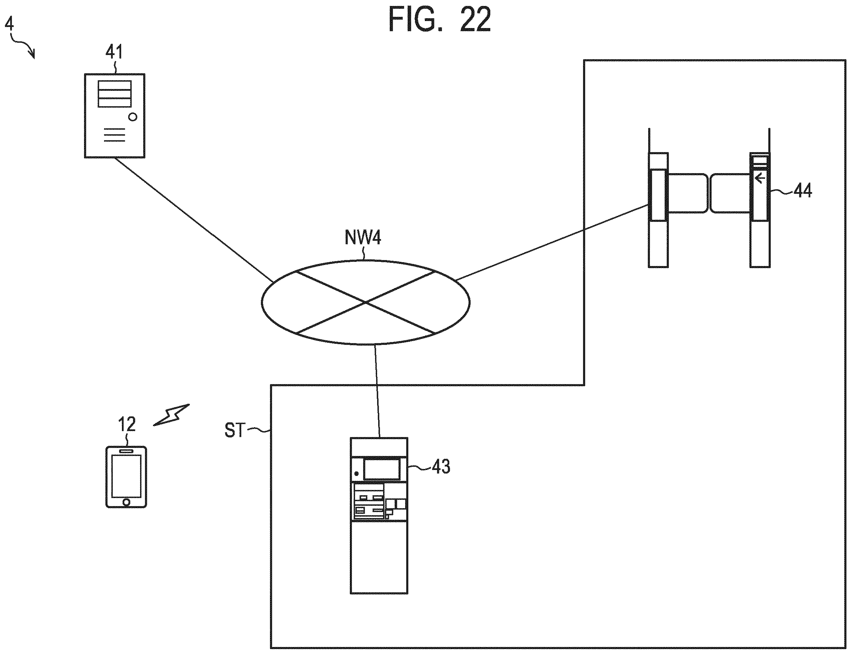

   Fig. 22 is a schematic diagram illustrating an overall configuration of an information processing system according to a fourth example embodiment of this disclosure.
[Fig. 23]

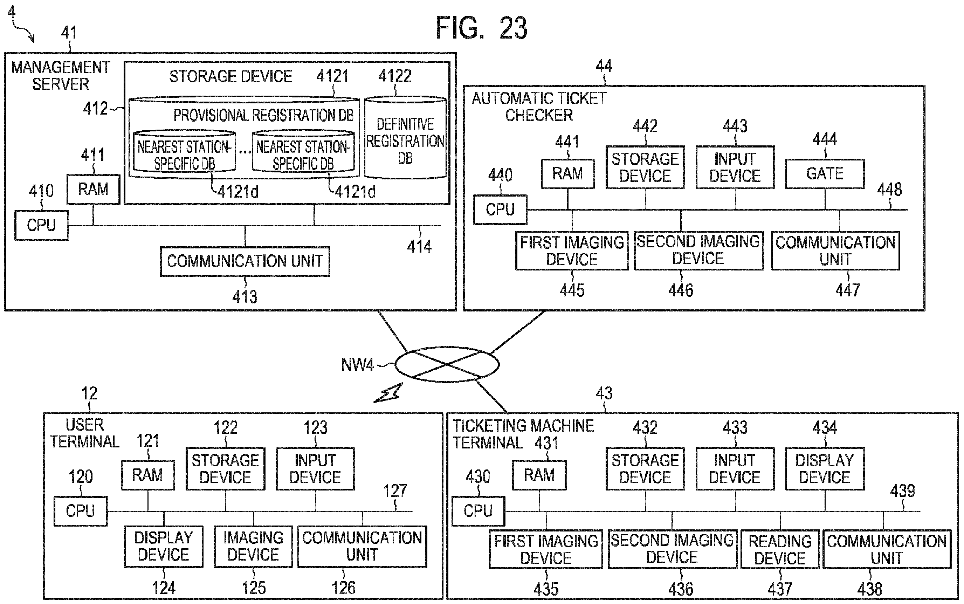

   Fig. 23 is a block diagram illustrating an example of a hardware configuration of the information processing system according to the fourth example embodiment of this disclosure.
[Fig. 24]

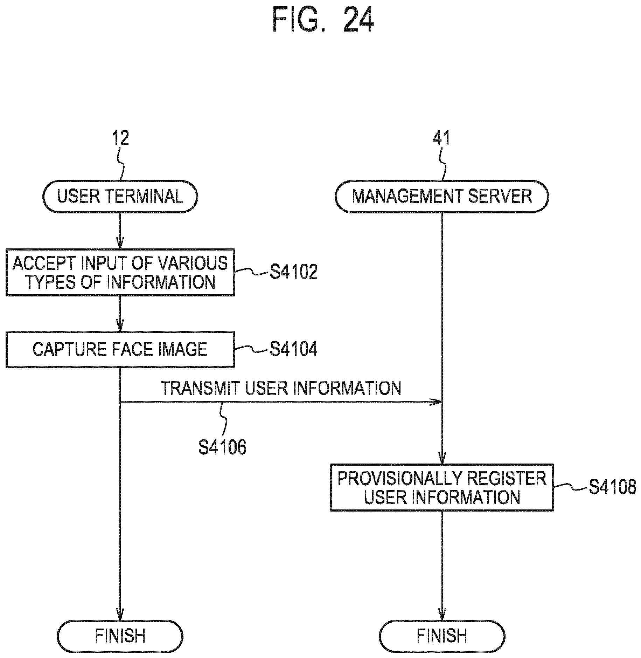

   Fig. 24 is a sequence diagram illustrating operations of a user terminal and a management server during a provisional registration processing in the information processing system according to the fourth example embodiment of to this disclosure.
[Fig. 25]

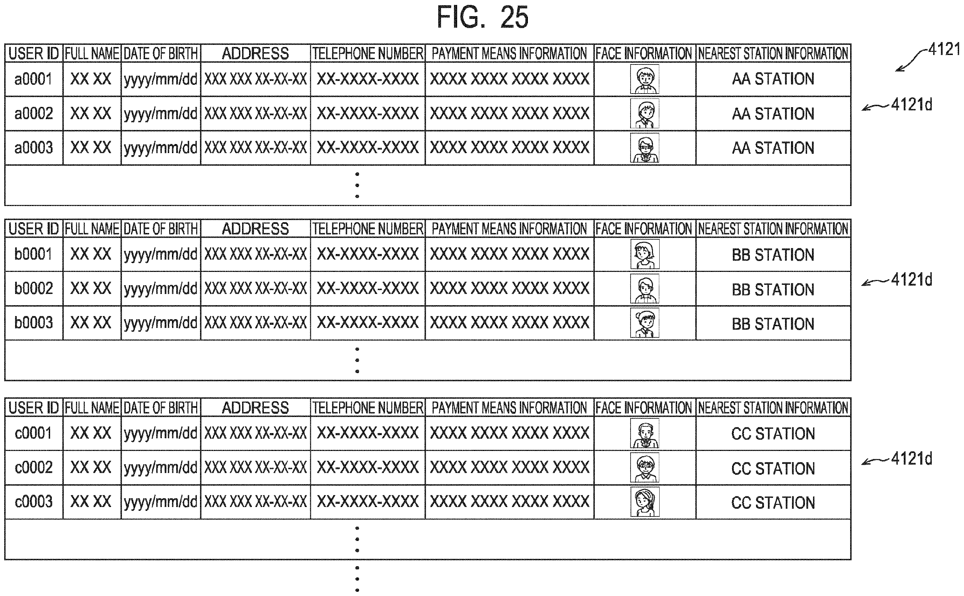

   Fig. 25 is a schematic diagram illustrating an example of a provisional registration database in the information processing system according to the fourth example embodiment of this disclosure.
[Fig. 26]

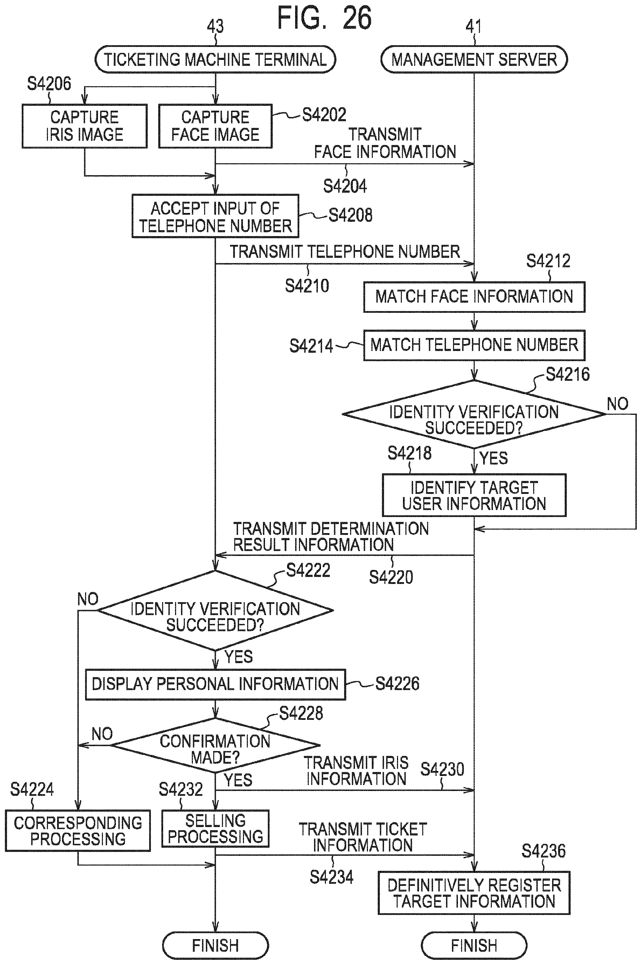

   Fig. 26 is a sequence diagram illustrating operations of a ticketing machine terminal and the management server during a definitive registration processing in the information processing system according to the fourth example embodiment of this disclosure.
[Fig. 27]

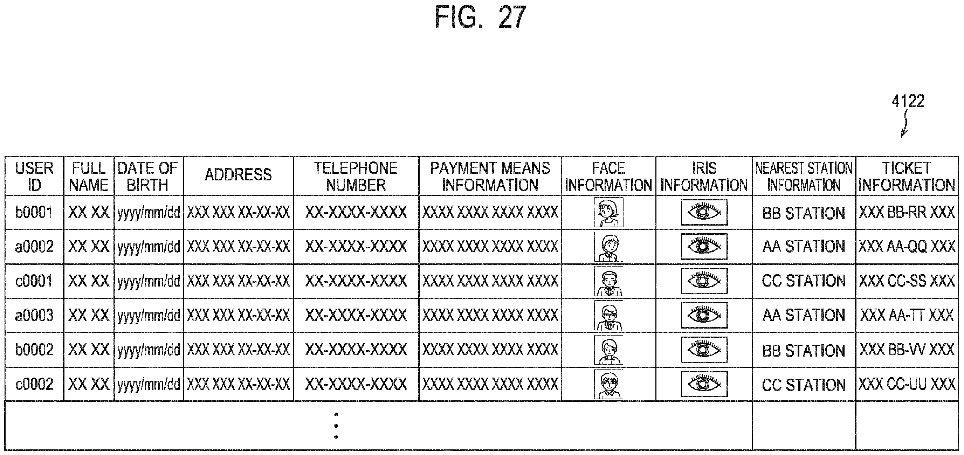

   Fig. 27 is a schematic diagram illustrating an example of a definitive registration database in the information processing system according to the fourth example embodiment of this disclosure.
[Fig. 28]

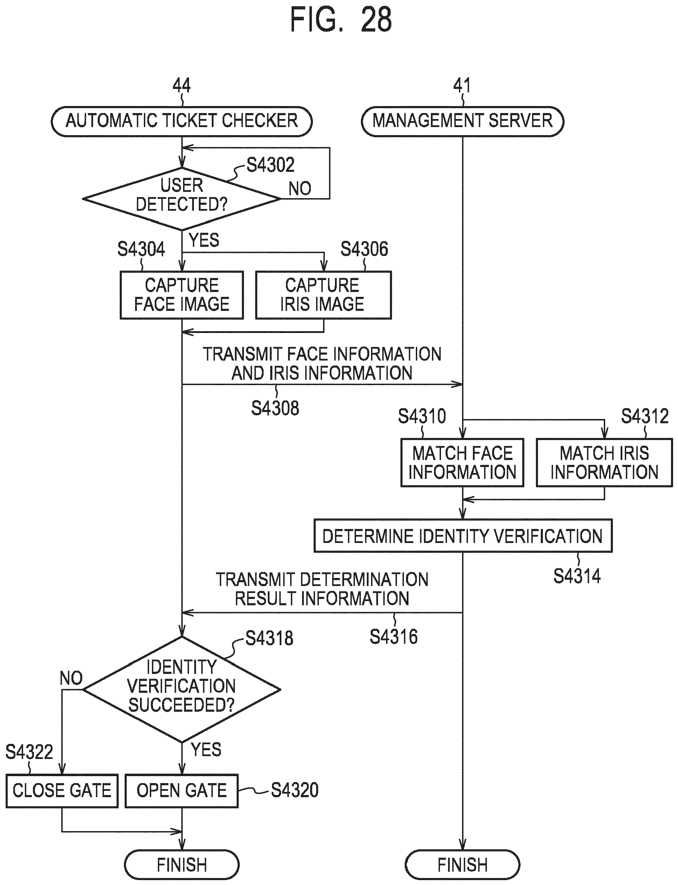

   Fig. 28 is a sequence diagram illustrating operations of an automatic ticket checker and the management server during procedures at a ticket gate in an information processing system according to a fourth example embodiment of this disclosure.
[Fig. 29]

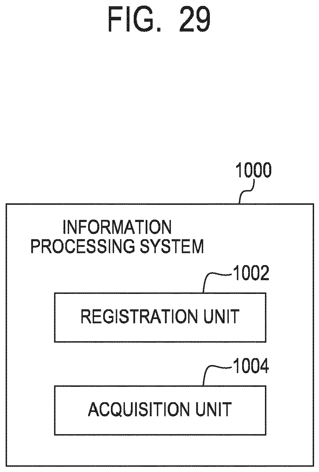

   Fig. 29 is a block diagram illustrating a configuration of an information processing apparatus according to another example embodiment of this disclosure.

### [Description of Embodiments]

### [First Example Embodiment]

An information processing system and an information processing method according to a first example embodiment of this disclosure will be described with reference to Fig. 1 to Fig. 7.

First, the overall configuration of the information processing system according to the present example embodiment will be described with reference to Fig. 1. Fig. 1 is a schematic diagram illustrating the overall configuration of the information processing system according to the present example embodiment.

As illustrated in Fig. 1, the information processing system 1 according to the present example embodiment includes a management server 11, a user terminal 12, and a shop terminal 13. The information processing system 1 according to the present example embodiment is a system for providing a payment service that executes biometric authentication payment for the purchase price of goods, services, or the like, to be purchased by a user who is a shopper at a shop SP which is a real shop. The biometric authentication payment is a payment using biometric authentication. The biometric authentication payment, not only eliminates the needs for cash, but also eliminates the need to present a medium for payment such as a credit card, a prepaid card, a smartphone or the like, and thus realizes empty-handed payment, by payment means associated with the biometric information of the user.

Note that, in the present example embodiment and second to fourth example embodiments described later, cases where face information and iris information are used as the biometric information of the user are described as examples, the biometric information of the user is not limited to the face information and the iris information. As the biometric information of the user, for example, a plurality of biometric information of different types such as face information, iris information, fingerprint information, palm print information, voiceprint information, gait information and the like may be suitably combined to be used.

The management server 11 is installed in a facility of a business operator providing a service including the payment service by the information processing system 1, for example. The user terminal 12 is an information processing terminal used by a user who is to be a shopper. The shop terminal 13 is installed in each of a plurality of shops SP located in various places. The information processing system 1 includes a plurality of shop terminals 13 installed in the plurality of shops SP.

The management server 11, the user terminal 12 and the shop terminal 13 are connected to a network NW1. The network NW1 includes a wide area network (WAN), a local area network (LAN), a mobile communication network, or the like. The user terminal 12 is configured to connect to the network NW1 by, for example, wireless communication. The shop terminal 13 may be configured to be connected to the network NW1 via a shop server such as a shop controller installed in the shop SP.

The management server 11 and the user terminal 12 can communicate with each other via the network NW1. The management server 11 and the shop terminal 13 can communicate with each other via the network NW1.

Next, each component of the information processing system 1 according to the present example embodiment will be described with reference to Fig. 2. Fig. 2 is a block diagram illustrating an example of the hardware configuration of the information processing system 1 according to the present example embodiment.

First, the management server 11 will be described.

The management server 11 is an information processing apparatus which manages the information processing system 1 and performs provisional registration and definitive registration of user information, matching of biometric information, processing of payment, and the like. The functions of the management server 11 may be implemented by a single server or by a plurality of servers.

As illustrated in Fig. 2, the management server 11 includes a central processing unit (CPU) 110, a random access memory (RAM) 111, a storage device 112, and a communication unit 113. The CPU 110, the RAM 111, the storage device 112, and the communication unit 113 are connected to a bus line 114.

The CPU 110 operates by executing a program stored in the storage device 112 and functions as a control unit for controlling the operation of the entire management server 11. The CPU 110 executes application programs stored in the storage device 112 and executes various processes as the management server 11. The RAM 111 provides a memory area necessary for the operation of the CPU 110.

The storage device 112 is constituted of a storage medium such as a nonvolatile memory, a hard disk drive, or the like and functions as a storage unit. The storage device 112 stores programs executed by the CPU 110, data referred to by the CPU 110 when the programs are executed, and the like.

The storage device 112 stores a provisional registration database (DB, Database) 1121 and a definitive registration DB 1122. The provisional registration DB 1121 is a database for provisionally registering user information including face information among the face information and iris information of the user. The provisional registration DB 1121 includes a plurality of region-specific DBs 1121d divided by regions such as prefectures where the shops SP the users to be shoppers plan to visit for the definitive registration are located. The definitive registration DB 1122 is a database in which user information including the face information and the iris information of the user is registered. Note that the provisional registration DB 1121 and the definitive registration DB 1122 may be separate databases or integrated databases.

The communication unit 113 is connected to the network NW1 and transmits and receives data via the network NW1. The communication unit 113 performs communication with the user terminal 12 and the shop terminal 13 in accordance with the control by the CPU 110.

Thus, the management server 11 is configured.

Next, the user terminal 12 will be described.

The user terminal 12 is a terminal owned by the user and, for example, a portable terminal owned or carried by the user. Specifically, the user terminal 12 is a portable information device such as a smartphone, a tablet terminal, a mobile phone, or the like. Note that the user terminal 12 does not necessarily have to be a portable terminal, and may be, for example, an information processing apparatus such as a personal computer installed in the user's residence, or the like.

As illustrated in Fig. 2, the user terminal 12 includes a CPU 120, a RAM 121, a storage device 122, an input device 123, a display device 124, an imaging device 125, and a communication unit 126. The CPU 120, the RAM 121, the storage device 122, the input device 123, the display device 124, the imaging device 125, and the communication unit 126 are connected to a bus line 127.

The CPU 120 operates by executing a program stored in the storage device 122 and functions as a control unit for controlling the operation of the entire user terminal 12. The CPU 120 executes the application programs stored in the storage device 122 and executes various processes as the user terminal 12. The RAM 121 provides a memory area necessary for the operation of the CPU 120.

The storage device 122 is constituted of a storage medium such as a nonvolatile memory, a hard disk drive, or the like and functions as a storage unit. The storage device 122 stores programs executed by the CPU 120, data referred to by the CPU 120 when the programs are executed, and the like. The storage device 122 can store information input from the input device 123. The storage device 122 can store image data imaged by the imaging device 125.

The storage device 122 stores an application program (Hereinafter referred to as "payment application") for using the payment service provided by the information processing system 1. The CPU 120 can execute various processes for the user to use the payment service by executing the payment application. As will be described later, the user can use the payment service without needing the user terminal 12 itself on which the payment application has been executed.

The input device 123 functions as an input unit for receiving input from the user. The user can input various kinds of information or input instructions for execution of processing to the user terminal 12 via the input device 123. The input device 123 is, for example, a touch panel incorporated in the display device 124, or the like.

The display device 124 functions as a display unit for displaying various screens to the user. The display device 124 displays various screens in accordance with the control by the CPU 120.

The imaging device 125 functions as a biometric information acquisition unit for capturing and acquiring a face image of the user as biometric information of the user. The imaging device 125 is, for example, an imaging device such as a digital camera capable of imaging a visible light region. The imaging device 125 captures and acquires the face image of the user under the control of a CPU 120.

Note that the user terminal 12 may be provided with a fingerprint scanner for reading a fingerprint to acquire a fingerprint image as the biometric information of the user in place of the imaging device 125 or in addition to the imaging device 125.

The communication unit 126 is connected to the network NW1 and transmits and receives data via the network NW1. The communication unit 126 communicates with the management server 11 in accordance with the control by the CPU 120.

Thus, the user terminal 12 is configured.

Next, the shop terminal 13 will be described.

The shop terminal 13 is an information processing apparatus which operates in a POS (Point Of Sales) system constructed in the shop SP selling objects to be purchased such as goods, services, or the like as a POS register. The shop terminal 13 is installed in, for example, a register counter, a service counter, or the like in the shop SP. The shop terminal 13 identifies a purchase object such as goods, services, or the like to be purchased by the user at the shop SP, and calculates a sales amount of the purchase object. The shop terminal 13 may be a terminal for a manned register operated by a clerk of the shop SP or a terminal for a self-checkout operated by the user who is a shopper.

As illustrated in Fig. 2, the shop terminal 13 includes a CPU 130, a RAM 131, a storage device 132, an input device 133, a display device 134, a first imaging device 135, a second imaging device 136, a reading device 137, and a communication unit 138. The CPU 130, the RAM 131, the storage device 132, the input device 133, the display device 134, the first imaging device 135, the second imaging device 136, the reading device 137, and the communication unit 138 are connected to a bus line 139.

The CPU 130 operates by executing a program stored in the storage device 132 and functions as a control unit for controlling the operation of the entire shop terminal 13. The CPU 130 executes application programs stored in the storage device 132 to execute various processes as the shop terminal 13. The RAM 131 provides a memory area necessary for the operation of the CPU 130.

The storage device 132 is constituted of a storage medium such as a nonvolatile memory, a hard disk drive, or the like and functions as a storage unit. The storage device 132 stores programs executed by the CPU 130, data referred to by the CPU 130 when the programs are executed, and the like. The storage device 132 can store information input from the input device 133. The storage device 132 can store image data captured by the first imaging device 135 and the second imaging device 136.

The input device 133 functions as an input unit for receiving input from the clerk or the user. The clerk or the user can input various kinds of information or input instructions to execute processing to the shop terminal 13 via the input device 133. The input device 133 is, for example, a touch panel incorporated in the display device 134, a keyboard, or the like.

The display device 134 functions as a display unit for displaying various screens to the clerk or the user. The display device 134 may have, for example, a configuration of two screens with a screen on the clerk side and a screen on the shopper side. The display device 134 displays various screens in accordance with the control by the CPU 130.

The first imaging device 135 functions as a biometric information acquisition unit for capturing and acquiring a face image of the user as biometric information of the user. The first imaging device 135 is, for example, an imaging device such as a digital camera capable of capturing a visible light region. The first imaging device 135 captures and acquires the face image of the user in accordance with the control by the CPU 130.

The second imaging device 136 functions as a biometric information acquisition unit for capturing and acquiring an iris image of the user as biometric information of the user. The second imaging device 136 is, for example, an imaging device such as a digital camera capable of imaging a near-infrared light region. The second imaging device 136 may have an infrared illuminator for irradiating near-infrared light to an object to be captured. The second imaging device 136 captures and acquires the iris image of the user in accordance with the control by the CPU 130.

The first imaging device 135 and the second imaging device 136 need not to be devices separated from each other, and may be constituted by a single imaging device. As the single imaging device, an imaging device capable of acquiring a high resolution image such as a 4K camera or a camera having more than the number of pixels of the 4K camera can be used. In this case, it is possible to extract face information, which is a feature amount relating to the face, and iris information, which is a feature amount relating to the iris, from one high-resolution image including the imaged face of the user, and use them for matching of the face information and matching of the iris information, respectively.

The reading device 137 functions as a reading unit for reading a code given to the purchase object of goods or the like purchased by the user. The reader 137 is, for example, a bar code reader for reading a goods code from a bar code, or a tag reader for reading a goods code from an RFID (Radio Frequency Identification) tag. The reader 137 reads the code of the purchase object in accordance with the control of the CPU 130. The CPU 130 can obtain information including the name, price, and the like of the purchase object corresponding to the code read by the reader 137 by inquiring a store controller or the like (not shown).

The communication unit 138 is connected to the network NW1 and transmits and receives data via the network NW1. The communication unit 138 communicates with the management server 11 in accordance with the control by the CPU 130.

In addition to the above configuration, the shop terminal 13 may include peripheral devices (not shown) such as a receipt printer, a cash drawer, a card reader, and the like. With these peripheral devices, the shop terminal 13 can provide a receipt to the user, perform cash payment, and perform payment by a credit card or the like presented at the shop SP.

Thus, the shop terminal 13 is configured.

Hereinafter, the operation of each component in the information processing system 1 according to the present example embodiment will be described with reference to Fig. 3 to Fig. 7. As each component operates, an information processing method according to the present example embodiment is executed.

First, the operations of the user terminal 12 and the management server 11 during the provisional registration processing will be described with reference to Fig. 3 and Fig. 4. Fig. 3 is a sequence diagram illustrating the operations of the user terminal 12 and the management server 11 during the provisional registration processing. Fig. 4 is a schematic diagram illustrating an example of the provisional registration DB 1121. In the provisional registration processing, user information including face information among face information and iris information of the user is provisionally registered in the provisional registration DB 1121.

Prior to using the payment service provided by the information processing system 1, the user obtains the payment application by downloading or the like and stores it in the storage device 122 of the user terminal 12 in an executable manner. When executing the payment application in the user terminal 12, the user can perform an opt-in process to allow the payment service provider to use the information about the user. In addition, instead of obtaining the payment application by downloading or the like and executing the payment application, the user can access the dedicated site by the web browser or the like of the user terminal 12 and perform the provisional registration processing of the same contents as the case of using the payment application.

The CPU 120 of the user terminal 12 on which the payment application has been executed functions as an acquisition unit, and acquires various types of information by accepting the user's input of various types of information, such as personal information, payment means information, and visit shop location information via the input device 123 (step S1102). The personal information is personal information about the user such as the name, the date of birth, the address, the telephone number, and the like of the user. The payment means information is information about the payment means used by the user for payment such as a credit card number, a prepaid number of electronic money, or the like. The visit shop location information is information about the location of the shop SP where the user plans to visit for the definitive registration among the plurality of shops SP, and specifically, information about the region where the shop SP is located, such as a prefecture, or the like.

Further, the CPU 120 functions as an acquisition unit, and acquires a face image which is the biometric information of the user by capturing the face image of the user by the imaging device 125 (step S1104). Note that the CPU 120 can handle the face image itself captured by the imaging device 125 or the feature amount extracted from the face image as the face information which is the biometric information of the user. The CPU 120 can also read the fingerprint of the user by a fingerprint scanner (not shown) and acquire a fingerprint image or its feature amount as fingerprint information which is the biometric information of the user, in place of the face information or together with the face information.

Note that the CPU 120 may execute either of the steps S1102 and S1104 first regardless of whether the steps S1102 or S1104 are preceding or following, or may execute both of the steps S1102 and S1104 in parallel.

Next, the CPU 120 functions as a transmission unit, and transmits the user information including the personal information, the payment means information, the visit shop location information, and the face information about the user acquired as described above to the management server 11 via the network NW1 (step S1106). When the fingerprint information is acquired as the biometric information of the user, the CPU 120 can transmit the user information including the fingerprint information in place of or along with the face information.

Thus, the user can apply for the registration of the user information by himself or herself by transmitting the user information from the user terminal 12 held by the user to the management server 11.

When the CPU 110 of the management server 11 receives and acquires the user information from the user terminal 12, the CPU 110 functions as a registration unit, and provisionally registers the acquired user information in the provisional registration DB 1121 (step S1108). At this time, the CPU 110 provisionally registers the user information in the region-specific DB 1121d corresponding to the region of the visit shop location information based on the visit shop location information included in the user information. Further, the CPU 110 provisionally registers various kinds of information included in the user information in the region-specific DB 1121d in association with each other.

Note that the plurality of region-specific DBs 1121d need not necessarily to be divided by regions such as prefectures, but may be divided by groups of the neighboring shops SP. In this case, the user can input information specifying the shop SP itself as the shop visit shop location information in the user terminal 12. Further, the CPU 110 can provisionally register the user information in the region-specific DB 1121d corresponding to the shop of the visit shop location information in accordance with the visit shop location information included in the user information.

Thus, the CPU 110 provisionally registers the pieces of the user information relating to the plurality of users in the plurality of region-specific DBs 1121d in accordance with the visit shop location information.

Fig. 4 illustrates examples of the plurality of region-specific DBs 1121d in the provisional registration DB 1121 of the management server 11. As illustrated in the figure, the provisional registration DB 1121 includes the plurality of region-specific DBs 1121d, for example, which are divided by prefectures as regions specified by visit shop location information. In each region-specific DB 1121d, the user information about each user is provisionally registered for each user ID (Identification) that is an identifier for identifying the plurality of users. The user information provisionally registered in the region-specific DB 1121d includes the personal information, the payment means information, the face information, the visit shop location information and the like associated with each other. The provisionally registered user information may include the fingerprint information as the biometric information.

Next, the operations of the shop terminal 13 and the management server 11 during the definitive registration processing will be described with reference to Fig. 5 and Fig. 6. Fig. 5 is a sequence diagram illustrating the operations of the shop terminal 13 and the management server 11 during the definitive registration processing. Fig. 6 is a schematic diagram illustrating an example of the definitive registration DB 1122.

The user whose user information is provisionally registered in the provisional registration DB 1121 as described above visits the shop SP located in the area of the visit shop location information input in the user terminal 12 in order to register the iris information also, which is the biometric information of the user, and thus definitively register the user information. The user for the purpose of the definitive registration moves to the installation place of the shop terminal 13 in the shop SP. The user can visit the shop SP only for the purpose of the definitive registration of the user information, or can visit the shop SP for the purpose of shopping at the shop SP together with the definitive registration of the user information.

In the shop terminal 13, whether or not the user is the user who has provisionally registered the user information is confirmed by input via the input device 133 by a clerk operating the shop terminal 13 or the user himself or herself. When it is confirmed that the user is the user who has provisionally registered the user information, the CPU 130 of the shop terminal 13 functions as an acquisition unit, and acquires a face image which is the biometric information of the user by capturing the face image of the user by the first imaging device 135 (step S1202). Note that the CPU 130 can handle the face image itself captured by the first imaging device 135 or the feature amount extracted from the face image as the face information which is the biometric information of the user. When the user information including the fingerprint information is provisionally registered, the CPU 130 reads the fingerprint of the user by a fingerprint scanner (not shown) and can acquire a fingerprint image or its feature amount as fingerprint information which is the biometric information of the user in place of the face information or together with the face information.

Next, the CPU 130 functions as a transmission unit, and transmits the face information acquired via the first imaging device 135 to the management server 11 via the network NW1 (step S1204). When the fingerprint information is acquired as the biometric information of the user, the CPU 130 can transmit the user information including the fingerprint information in place of or along with the face information.

Further, the CPU 130 functions as an acquisition unit, and acquires an iris image which is the biometric information of the user by capturing an iris image of the user by the second imaging device 136 (step S1206). When the face image is captured and acquired by the first imaging device 135, the CPU 130 can capture and acquire the iris image by the second imaging device 136. More specifically, the CPU 130 can capture and acquire the iris image by the second imaging device 136 at the same time as or in parallel with capturing and acquiring the face image by the first imaging device 135. The CPU 130 can handle the iris image itself captured by the second imaging device 136 or the feature amount extracted from the iris image as the iris information which is the biometric information of the user. When acquiring the fingerprint information, the CPU 130 can acquire the iris information in parallel with the acquisition of the fingerprint information.

Thus, when the CPU acquires the face information via the first imaging device 135, the CPU 130 also acquires the iris information via the second imaging device 136. Thus, the CPU 130 can efficiently acquire iris information.

Further, the CPU 130 functions as an acquisition unit, and receives the user's input of the telephone number via the input device 133 to acquire the telephone number (step S1208). The telephone number input here functions as a character string used for identity verification. In place of the telephone number, the CPU 130 may use another character string such as a date of birth, a password, a passphrase, or the like, or the like that can be uniquely input by the user. In this case, the user may provisionally register the user information including another character string in the region-specific DB 1121d together with the telephone number or in place of the telephone number.

Next, the CPU 130 functions as a transmission unit, and transmits the telephone number acquired via the input device 133 to the management server 11 through the network NW1 (step S1210).

Note that the CPU 130 may execute either of the steps S1202 and S1208 first regardless of whether the steps S1202 or S1208 is preceding or following, or may execute both of the steps S1202 and S1208 in parallel. The CPU 130 can execute the step S1204 following the step S1202 and the step S1210 following the step S 1208 at any timing.

On the other hand, the CPU 110 of the management server 11 functions as a matching unit, and executes matching of the face information received and acquired from the shop terminal 13 (step S1212). At this time, the CPU 110 matches the target face information, which is the face information acquired from the shop terminal 13, by 1:N with the plurality of registered face information, which is the face information provisionally registered in the region-specific DB 1121d corresponding to the region where the shop SP visited by the user is located. The CPU 110 can calculate a matching score corresponding to the similarity between the target face information and the registered face information by matching the feature amount extracted from the face image in matching of the face information. As a result of matching of the face information, the CPU 110 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 110 can execute matching of the fingerprint information in place of the matching of the face information or together with the matching of the face information.

In the present example embodiment, the CPU 110 matches the target face information with the plurality of face information provisionally registered in the region-specific DB 1121 corresponding to the region where the shop SP visited by the user is located as a population among the plurality of region-specific DBs 1121. Thus, in the present example embodiment, the population for the matching of the face information is narrowed down by region in accordance with the visit shop location information associated with the face information of the user or the like, so that the face information can be efficiently matched with high accuracy.

Next, the CPU 110 functions as a matching unit, and executes matching of the telephone number received and acquired from the shop terminal 13 (step S1214). At this time, the CPU 110 matches the telephone number acquired from the shop terminal 13 with the plurality of telephone numbers provisionally registered in the region-specific DB 1121d and associated with the upper plurality of pieces of registered face information identified in the step S1212.

Next, the CPU 110 functions as a determination unit, and determines whether the identity verification of the user has succeeded or failed based on matching result of the face information and matching result of the telephone number (step S1216). That is, when the CPU finds a telephone number matching the telephone number acquired from the shop terminal 13 in the plurality of telephone numbers associated with the upper plurality of pieces of registered face information, the CPU 110 determines that the identity verification has been succeeded by matching coincidence of the face information and matching coincidence of the telephone number. On the other hand, when the CPU 110 does not find any telephone number matching the telephone number acquired from the shop terminal 13 in the plurality of telephone numbers associated with the upper plurality of pieces of registered face information, the CPU 110 determines that the identity verification has failed due to mismatch of the telephone number.

In the present example embodiment, since not only the matching of the face information, but also the matching of the telephone number are used to verify the identity of the user, it is possible to verify the identity of the user more reliably. However, it is not necessary to perform the matching of the character string such as the telephone number, or the like. In this case, the identity can be verified by performing matching of the biometric information such as the face information, or the like.

Note that, for example, when the CPU 110 cannot find the registered face information whose matching score with the target face information is higher than or equal to a predetermined threshold value, the CPU 110 can also determine that the identity verification has failed due to mismatch of the face information without performing matching of the telephone number.

When the CPU 110 determines that the identity verification has succeeded (step S1216, YES), the CPU 110 identifies, as the target user information, the user information of the user for the purpose of definitive registration from the region-specific DB 1121d (step S1218). The target user information identified by the CPU 110 is the user information including any of the face information of the upper plurality of pieces of registered face information in the order of higher similarity to the target face information and the telephone number matching the telephone number acquired from the shop terminal 13.

After the identification of the target user information or when the CPU 110 determines that the identity verification has failed (step S1216, NO), the CPU 110 functions as a transmission unit, and transmits determination result information indicating the determination result of the identity verification to the shop terminal 13 via the network NW1 (step S1220). The determination result information indicates whether the identity verification has succeeded or has failed. In addition, when the identity verification of the user has succeeded and the target user information is identified, the CPU 110 transmits all or part of the target user information together with the determination result information to the shop terminal 13 via the network NW1. The CPU 110 can include, for example, the personal information, the face information which is a face image, and the like as a part of the target user information to be transmitted.

When the CPU of the shop terminal 13 receives and acquires the determination result information from the management server 11, the CPU 130 functions as a determination unit, and determines whether the determination result information indicates that the identity verification has succeeded or has failed (step S1222) .

When the CPU 130 determines that the determination result information indicates that the identity verification has failed (step S1222, NO), the CPU 130 executes a corresponding processing for the user (step S1224). As the corresponding processing, the CPU 130 can cause the display device 134 to display, for example, a screen for urging the user to re-execute the provisional registration processing using the user terminal 12, a screen for guiding the user information to be registered in the shop SP, or the like.

On the other hand, when the CPU 130 determines that the determination result information indicates that the identity verification has succeeded (step S1222, YES), the CPU 130 displays the personal information among the target user information on the display device 134 (step S1226). The CPU 130 can also display the face image in the target user information.

The user or the shop clerk can confirm whether or not the personal information, the face image or the like displayed on the display device 134 belongs to the user himself or herself. For example, the clerk can confirm that the displayed personal information, face image or the like belongs to the user himself or herself through conversation with the user, visual observation of the user's face or the like. The user or the shop clerk can input an input indicating whether or not the user has confirmed that the personal information, the face image or the like belongs to the user himself or herself to the shop terminal 13 via the input device 133.

Next, the CPU 130 functions as a determination unit, and determines whether or not the user or the shop clerk has confirmed that the personal information, the face image, or the like belongs to the user himself or herself based on the input via the input device 133 (step S1228).

When the CPU 130 determines that no confirmation has been made (step S1228, NO), the CPU 130 executes the same corresponding processing as described above (step S1224).

On the other hand, when the CPU 130 determines that the confirmation has been made (step S1228, YES), the CPU functions as a transmission unit, and transmits the iris information acquired in the step S1206 to the management server 11 via the network NW1 (step S1230).

When the CPU 110 of the management server 11 receives and acquires the iris information from the shop terminal 13, the CPU 110 functions as a registration unit, adds the iris information to the target user information, and registers the target user information in the definitive registration DB 1122 (step S1232). At this time, the CPU 110 registers the iris information added to the target user information in association with other information included in the target user information. Thus, the CPU 110 associates the face information and the iris information with each other according to the matching result of the face information and the telephone number, and registers the user information including the face information and the iris information in the definitive registration DB 1122.

In the present example embodiment, the iris information required to be acquired by using a dedicated imaging device capable of capturing a near-infrared light region is acquired and registered in the shop terminal 13. On the other hand, the face information is transmitted from the user terminal 12 different from the shop terminal 13 to the management server 11 and registered before the registration of the iris information. Therefore, in the present example embodiment, as described later, it is possible to efficiently acquire and register the face information and the iris information which are a plurality of pieces of biometric information used for the biometric authentication.

Fig. 6 illustrates an example of the definitive registration DB 1122 of the management server 11. As illustrated in the figure, the user information about each user is registered in the definitive registration DB 1122 for each user ID that is an identifier for identifying the plurality of users. The user information registered in the definitive registration DB 1122 includes the personal information, the payment means information, the face information, the iris information, the visit shop location information, and the like associated with each other. The registered user information may include the fingerprint information as the biometric information.

In the above description, the case where the CPU 110 of the management server 11 performs the matching of the face information and the matching of the telephone number during the definitive registration of the user information has been described, but the example embodiment is not limited thereto. For example, the CPU 130 of the shop terminal 13 may have a function of performing the matching of the face information and the matching of the telephone number, and a function of performing the identity verification based on the matching results. In this case, the CPU 130 can refer to the provisional registration DB 1121 of the management server 11 via the network NW1, for example.

Next, the operations of the shop terminal 13 and the management server 11 during payment processing will be described with reference to Fig. 7. Fig. 7 is a sequence diagram illustrating the operations of the shop terminal 13 and the management server 11 during the payment processing.

The user who has completed the definitive registration of the user information at the shop SP can make a purchase at the shop SP or another shop SP on the day or at a later date. In this case, the user can pay for a purchase object at the store SP by using the biometric authentication payment.

The CPU 130 of the shop terminal 13 of the shop SP which the user visits for the purpose of shopping reads the code of a purchase object selected by the user by the reader 137, and acquires information including the name, the price, and the like, of the purchase object corresponding to the code from a shop server (not shown), or the like. Thereby, the CPU 130 generates purchase information which is information including the price of the purchase object (step S1302).

Next, the CPU 130 determines whether or not the biometric authentication payment is selected as the payment method for the price of the purchase target (step S1304). The CPU 130 can determine whether or not the biometric authentication payment is selected based on the input or the like by the clerk or the user via the input device 133.

When the CPU 130 determines that the biometric authentication payment is not selected (step S1304, NO), the CPU 130 executes processing for another payment method (step S1306). Another payment methods include, for example, cash payment, credit card payment using a credit card actually presented by the user, or the like.

On the other hand, when the CPU 130 determines that the biometric authentication payment is selected (step S1304, YES), the CPU 130 functions as an acquisition unit, and acquires a face image which is the biometric information of the user by capturing the face image of the user by the first imaging device 135 (step S1308). Note that the CPU 130 can handle the face image itself captured by the first imaging device 135 or the feature amount extracted from the face image as the face information which is the biometric information of the user. When the user information including the fingerprint information is definitively registered, the CPU 130 can read the fingerprint of the user by the fingerprint scanner (not shown) and acquire a fingerprint image or its feature amount as fingerprint information which is the biometric information of the user, in place of the face information or together with the face information.

Further, the CPU 130 functions as an acquisition unit, and acquires an iris image which is the biometric information of the user by capturing an iris image of the user by the second imaging device 136 (step S1310). The CPU 130 can handle the iris image itself captured by the second imaging device 136 or the feature amount extracted from the iris image as iris information which is the biometric information of the user.

Note that the CPU 130 may execute either of the steps S1308 and S1310 first regardless of whether the steps S1308 or S1310 is preceding or following, or may execute both of the steps S1308 and S1310 in parallel.

Next, the CPU 130 functions as a transmission unit, and transmits the face information acquired via the first imaging device 135 and the iris information acquired via the second imaging device 136 to the management server 11 via the network NW1 (step S1312). When the fingerprint information has been acquired, the CPU 130 can transmit the fingerprint information in place of the face information or together with the face information.

On the other hand, the CPU 110 of the management server 11 functions as a matching unit, and executes matching of the face information received and acquired from the shop terminal 13 (step S1314). At this time, the CPU 110 matches the target face information, which is the face information acquired from the shop terminal 13, by 1:N with the plurality of registered face information, which is the face information registered in the definitive registration DB 1122. The CPU 110 can calculate a matching score corresponding to the similarity between the target face information and the registered face information by matching the feature amount extracted from the face image in matching of the face information. As a result of the matching of the face information, the CPU 110 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 110 can execute matching of the fingerprint information in place of the matching of the face information or together with the matching of the face information.

The CPU 110 functions as a matching unit, and executes matching of the iris information received and acquired from the shop terminal 13 (step S1316). At this time, the CPU 110 matches the target iris information, which is the iris information acquired from the shop terminal 13, by 1:N with a plurality of registered iris information, which is the iris information registered in the definitive registration DB 1122. The CPU 110 can calculate a matching score corresponding to the similarity between the target iris information and the registered iris information by matching the feature amount extracted from the iris information in matching of the iris information. As a result of the matching of the iris information, the CPU 110 identifies an upper plurality of pieces of registered iris information equal to and higher than a predetermined rank in the order of higher similarity to the target iris information, for example, the pieces of the registered iris information of the upper ranks from the first to the tenth.

Note that the CPU 110 may execute either of the steps S1314 and S1316 first regardless of whether the steps S1314 or S1316 is preceding or following, or may execute both of the steps S1314 and S1316 in parallel.

Next, the CPU 110 functions as a determination unit, and determines whether the identity verification of the user has succeeded or failed based on the matching result of the face information and the matching result of the iris information (step S1318). That is, when the CPU 110 finds the user information including both of any of the upper plurality of pieces of registered face information and any of the upper plurality of pieces of registered iris information in the definitive registration DB 1122, the CPU 110 determines that the identity verification has been succeeded by matching coincidence of both the face information and the iris information. On the other hand, when the CPU 110 does not find the user information including both of any of the upper plurality of pieces of registered face information and any of the upper plurality of pieces of registered iris information, the CPU 110 determines that the identity verification has failed due to mismatch of at least one of the face information and the iris information.

When the CPU 110 determines that the identity verification has been succeeded (step S1318, YES), the CPU identifies the target user information for the payment process described later (step S1320). The target user information is the user information including both of any of the upper plurality of pieces of registered face information and any of the upper plurality of pieces of registered iris information.

Thus, the CPU 110 executes the identity verification of the user by the biometric authentication using the face information and the iris information which are the plurality of biometric information of the user. In the present example embodiment, since the biometric authentication is performed using a plurality of pieces of biometric information, the biometric authentication with high accuracy can be realized even if the number of pieces of the user information registered in the definitive registration DB 1122 is enormous. In particular, in the present example embodiment, since the iris information with higher matching accuracy as well as the face information is used for the biometric authentication, the biometric authentication with higher accuracy can be realized.

In the present example embodiment, since the iris information, which is difficult to impersonate by a counterfeit, is used for the biometric authentication, safer biometric authentication can be realized without liveness detection.

After the identification of the target user information or when the CPU 110 determines that the identity verification has failed (step S1318, NO), the CPU 110 functions as a transmission unit, and transmits determination result information indicating the determination result of the identity verification to the shop terminal 13 via the network NW1 (step S1322). The determination result information indicates whether the identity verification has succeeded or has failed.

When the CPU of the shop terminal 13 receives and acquires the determination result information from the management server 11, the CPU 130 functions as a determination unit, and determines whether the determination result information indicates that the identity verification has succeeded or has failed (step S1324) .

When the CPU determines that the determination result information indicates that the identity verification has failed (step S1324, NO), the CPU 130 executes the same processing as described above for other payment methods (step S1306).

On the other hand, when the CPU determines that the determination result information indicates that the identity verification has succeeded (step S1324, YES), the CPU 130 transmits the purchase information of the purchase target and a payment request for the purchase price to the management server 11 via the network NW1 (step S1326).

The CPU 130 can also transmit the purchase information to the management server 11 in advance. For example, the CPU 130 may transmit the purchase information together with the face information and the iris information to the management server 11 in the step S1312. In this case, when the CPU of the management server 11 determines that the identity verification of the user has been succeeded by the matching of the face information and the matching of the iris information, the CPU 110 can skip the transmission of the determination result information in the step S1322 and proceed to the payment processing in the step S1328. The CPU 130 of the shop terminal 13 can skip the steps S1324 and S1326.

The CPU 110 of the management server 11 functions as a payment processing unit, and upon receiving and acquiring the purchase information and the payment request of the purchase target from the shop terminal 13, executes payment processing of the price of the purchase target (step S1328). The CPU 110 executes the payment processing of the price of the purchase target on the basis of the payment means information included in the target user information. The CPU 110 can execute the payment processing by requesting the payment processing to the server of the payment institution, for example. In the payment processing, the payment of the price of the purchase target may be completed by the payment means indicated in the payment means information, or the payment of the price of the purchase target may not be completed due to the expiration of the validity of the payment means.

In the present example embodiment, the CPU 110 cannot execute the payment processing when the face information among the face information and the iris information is provisionally registered. On the other hand, as described above, the CPU 110 can execute the payment processing when the identity verification based on the matching result of the face information and the iris information has succeeded after the time when the face information and the iris information are registered.

Note that the CPU 110 may be configured to execute the payment processing even when the face information among the face information and the iris information is provisionally registered. In this case, for example, the CPU 110 can be configured to perform matching of the face information and matching of the character string such as the telephone number to confirm the identity, and to execute the payment processing in the same manner when the identity verification based on the matching result of the face information and the character string has succeeded. With this configuration, the payment processing can be executed even before the registration of iris information, and its accuracy can be secured. In this case as well, the CPU 110 can be configured to execute the payment processing when the identity verification based on the matching result of the face information and the iris information has succeeded after the time when the face information and the iris information are registered.

Next, the CPU 110 functions as a transmission unit, and transmits payment result information indicating the payment result of the price of the purchase target to the shop terminal 13 via the network NW1 (step S1330). The payment result information indicates whether the payment of the price of the purchase target has been completed or not.

When the CPU of the shop terminal 13 receives and acquires the payment result information from the management server 11, the CPU 130 functions as a determination unit, and determines whether the payment result information indicates that the payment can be completed or not (step S1332).

When the CPU determines that the payment result information indicates that the payment cannot be completed (step S1332, NO), the CPU 130 executes the same processing as described above for other payment methods (step S1306).

On the other hand, when the CPU determines that the payment result information indicates that the payment can be completed (step S1332, YES), the CPU 130 notifies the user that the payment of the price of the purchase target has been completed by the biometric authentication payment (step S1334). For example, the CPU 130 can display on the display device 134 a screen indicating that the payment of the price of the purchase object has been completed by the biometric authentication payment, or can output a message voice or sound effect indicating that the payment has been completed from an audio output device (not shown) to notify the user.

Thus, according to the present example embodiment, while the iris information is acquired and registered by the shop terminal 13, the face information is transmitted from the user terminal 12 to the management server 11 and registered before the iris information is registered. Therefore, according to the present example embodiment, the face information and the iris information can be efficiently acquired and registered.

Further, in the present example embodiment, since the biometric authentication is performed using the plurality of pieces of biometric information, the biometric authentication with high accuracy can be realized even if the number of pieces of user information registered in the definitive registration DB 1122 is enormous.

In the above description, the case where the CPU 110 of the management server 11 performs the matching of the face information and the matching of the iris information during the payment of the price has been described, but the example embodiment is not limited thereto. For example, the CPU 130 of the shop terminal 13 may have a function of performing the matching of the face information and the matching of the iris information, and a function of performing the identity verification based on the matching results. In this case, the CPU 130 can refer to the definitive registration DB 1122 of the management server 11 via the network NW1, for example.

### [Second Example Embodiment]

An information processing system and an information processing method according to a second example embodiment of this disclosure will be described with reference to Fig. 8 to Fig. 14. Note that the same components as those in the information processing system and the information processing method according to the first example embodiment described above are labeled with the same references, and the description thereof will be omitted or simplified.

First, the overall configuration of the information processing system according to the present example embodiment will be described with reference to Fig. 8. Fig. 8 is a schematic diagram illustrating the overall configuration of an information processing system according to the present example embodiment.

As illustrated in Fig. 8, the information processing system 2 according to the present example embodiment includes a management server 21, a user terminal 12, a check-in terminal 23, and a boarding gate apparatus 24. The information processing system 2 according to the present example embodiment is a system for performing procedures at a boarding gate using biometric authentication for a user who is a passenger boarding an international or domestic aircraft at an airport DA. In the procedures at the boarding gate using the biometric authentication, the propriety of passage through the boarding gate is determined by the biometric authentication using the biometric information of the user.

The management server 21 is installed in a facility of an airline company operating an aircraft, an airport company operating the airport DA, or the like. The user terminal 12 is an information processing terminal used by a user who is a passenger of an aircraft. The check-in terminal 23 is installed in a check-in lobby in the airport DA, for example. The boarding gate apparatus 24 is installed at a boarding gate in the airport DA.

The management server 21, the user terminal 12, the check-in terminal 23 and the boarding gate apparatus 24 are connected to a network NW2. The network NW2 comprises a WAN, a LAN, a mobile communication network, or the like. The user terminal 12 is configured to connect to the network NW2 by, for example, wireless communication.

The management server 21 and the user terminal 12 can communicate with each other via the network NW2. The management server 21 and the check-in terminal 23 can communicate with each other via the network NW2. The management server 21 and the boarding gate apparatus 24 can communicate with each other via the network NW2.

Next, each component of the information processing system 2 according to the present example embodiment will be described with reference to Fig. 9. Fig. 9 is a block diagram illustrating an example of the hardware configuration of the information processing system 2 according to the present example embodiment.

First, the management server 21 will be described.

The management server 21 is an information processing apparatus which manages the information processing system 2 and performs provisional registration and definitive registration of user information, matching of biometric information, and the like. The functions of the management server 21 may be implemented by a single server or by a plurality of servers.

As illustrated in Fig. 9, the management server 21 includes a CPU 210, a RAM 211, a storage device 212, and a communication unit 213. The CPU 210, the RAM 211, the storage device 212, and the communication unit 213 are connected to a bus line 214.

The CPU 210 operates by executing a program stored in the storage device 212 and functions as a control unit for controlling the operation of the entire management server 21. The CPU 210 executes application programs stored in the storage device 212 and executes various processes as the management server 21. The RAM 211 provides a memory area necessary for the operation of the CPU 210.

The storage device 212 is constituted of a storage medium such as a nonvolatile memory, a hard disk drive, or the like and functions as a storage unit. The storage device 212 stores programs executed by the CPU 210, data referred to by the CPU 210 when the programs are executed, and the like.

The storage device 212 stores a provisional registration DB 2121 and a definitive registration DB 2122. The provisional registration DB 2121 is a database for provisionally registering user information including face information among the face information and iris information of the user. The provisional registration DB 2121 includes a plurality of departure date-specific DBs 2121d divided by departure dates when users who become passengers depart from the airport DA by aircrafts. The definitive registration DB 2122 is a database in which user information including the face information and the iris information of the user is registered. Note that the provisional registration DB 2121 and the definitive registration DB 2122 may be separate databases or integrated databases.

The communication unit 213 is connected to the network NW2 and transmits and receives data via the network NW2. The communication unit 213 communicates with the user terminal 12, the check-in terminal 23, and the boarding gate apparatus 24 in accordance with the control by the CPU 210.

Thus, the management server 21 is configured.

Next, the user terminal 12 will be described.

The user terminal 12 is as described in the first example embodiment. The storage device 122 stores an application program (Hereinafter referred to as "airline application") for undergoing the procedures at the boarding gate performed by the information processing system 2. The CPU 120 can execute various processes for the user to undergo the procedures at the boarding gate by executing the airline application. As described later, the user can undergo the procedures at the boarding gate without needing the user terminal 12 itself on which the airline application is executed.

Next, the check-in terminal 23 will be described.

The check-in terminal 23 is an automatic check-in terminal for performing the boarding procedures by the user's own operation. The check-in terminal 23 may be a check-in terminal installed in a manned counter and operated by an employee of an airline company.

As illustrated in Fig. 9, the check-in terminal 23 includes a CPU 230, a RAM 231, a storage device 232, an input device 233, a display device 234, a first imaging device 235, a second imaging device 236, a reading device 237, and a communication unit 238. The CPU 230, the RAM 231, the storage device 232, the input device 233, the display device 234, the first imaging device 235, the second imaging device 236, the reading device 237, and the communication unit 238 are connected to a bus line 239.

The CPU 230 operates by executing a program stored in the storage device 232 and functions as a control unit for controlling the operation of the entire check-in terminal 23. The CPU 230 executes application programs stored in the storage device 232 and executes various processes as the check-in terminal 23. The RAM 231 provides a memory area necessary for the operation of the CPU 230.

The storage device 232 is constituted of a storage medium such as a nonvolatile memory, a hard disk drive, or the like and functions as a storage unit. The storage device 232 stores programs executed by the CPU 230, data referred to by the CPU 230 when the programs are executed, and the like. The storage device 232 can store information input from the input device 233. The storage device 232 can store image data captured by the first imaging device 235 and the second imaging device 236.

The input device 233 functions as an input unit for receiving input from the user. The user can input various kinds of information or input instructions to execute processing to the check-in terminal 23 via the input device 233. The input device 233 is, for example, a touch panel incorporated in the display device 234, a keyboard, or the like.

The display device 234 functions as a display unit for displaying various screens to the user. The display device 234 displays various screens in accordance with the control by the CPU 230.

The first imaging device 235 functions as a biometric information acquisition unit for capturing and acquiring a face image of the user as biometric information of the user. The first imaging device 235 is, for example, an imaging device such as a digital camera capable of capturing a visible light region. The first imaging device 235 captures and acquires the face image of the user in accordance with the control by the CPU 230.

The second imaging device 236 functions as a biometric information acquisition unit for capturing and acquiring an iris image of the user as biometric information of the user. The second imaging device 236 is, for example, an imaging device such as a digital camera capable of capturing a near-infrared light region. The second imaging device 236 may have an infrared illuminator for irradiating near-infrared light to an object to be captured. The second imaging device 236 captures and acquires the iris image of the user in accordance with the control by the CPU 230.

The first imaging device 235 and the second imaging device 236 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The reading device 237 functions as an information acquisition unit for acquiring information recorded in a passport, an airline ticket, and the like, by reading the passport, the airline ticket medium, and the like of the user. The airline ticket medium is, for example, a paper airline ticket, a portable terminal for displaying an e-ticket copy, or the like. The reading device 237 includes, for example, a code reader, an image scanner, a contactless integrated circuit (IC) reader, an optical character reader (OCR) device, and the like.

The communication unit 238 is connected to the network NW2 and transmits and receives data via the network NW2. The communication unit 238 communicates with the management server 21 in accordance with the control by the CPU 230.

Thus, the check-in terminal 23 is configured.

Next, the boarding gate apparatus 24 will be described.

The boarding gate apparatus 24 is a gate terminal for confirming that the user is a passenger of an aircraft capable of boarding from a boarding gate where the boarding gate apparatus 24 is installed.

As illustrated in Fig. 9, the boarding gate apparatus 24 includes a CPU 240, a RAM 241, a storage device 242, a display device 243, a gate 244, a first imaging device 245, a second imaging device 246, and a communication unit 247. The CPU 240, the RAM 241, the storage device 242, the display device 243, the gate 244, the first imaging device 245, the second imaging device 246, and the communication unit 247 are connected to a bus line 248.

The CPU 240 operates by executing a program stored in the storage device 242 and functions as a control unit for controlling the operation of the entire boarding gate apparatus 24. The CPU 240 executes application programs stored in the storage device 242 to execute various processes as the boarding gate apparatus 24. The RAM 241 provides a memory area necessary for the operation of the CPU 240.

The storage device 242 is constituted of a storage medium such as a nonvolatile memory, a hard disk drive, or the like and functions as a storage unit. The storage device 242 stores programs executed by the CPU 240, data referred to by the CPU 240 when the programs are executed, and the like. The storage device 242 can store image data captured by the first imaging device 245 and the second imaging device 246.

The display device 243 functions as a display unit for displaying various screens to the user. The display device 243 displays various screens in accordance with the control by the CPU 240.

The gate 244 shifts to an open state allowing the passage of the user or a closed state blocking the passage of the user in accordance with the control by the CPU 240 according to the success or failure of the identity verification of the user in the boarding gate apparatus 24. The type of the gate 244 is, for example, a type of a flapper gate provided from one side or both sides of the passage and opened and closed by a flapper, a turn-style gate in which three bars rotate, or the like.

The first imaging device 245 functions as a biometric information acquisition unit for capturing and acquiring a face image of a user as biometric information of the user. The first imaging device 245 is, for example, an imaging device such as a digital camera capable of capturing a visible light region. The first imaging device 245 captures and acquires the face image of the user in accordance with the control by the CPU 240.

The second imaging device 246 functions as a biometric information acquisition unit for capturing and acquiring an iris image of the user as biometric information of the user. The second imaging device 246 is, for example, an imaging device such as a digital camera capable of capturing a near-infrared light region. The second imaging device 246 may have an infrared illuminator for irradiating near-infrared light to an object to be captured. The second imaging device 246 captures and acquires the iris image of the user in accordance with the control by the CPU 240.

The first imaging device 245 and the second imaging device 246 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The communication unit 247 is connected to the network NW2 and transmits and receives data via the network NW2. The communication unit 247 communicates with the management server 21 in accordance with the control by the CPU 240.

Thus, the boarding gate apparatus 24 is configured.

Hereinafter, the operation of each component in the information processing system 2 according to the present example embodiment will be described with reference to Fig. 10 to Fig. 14. As each component operates, an information processing method according to the present example embodiment is executed.

First, the operations of the user terminal 12 and the management server 21 during the provisional registration processing will be described with reference to Fig. 10 and Fig. 11. Fig. 10 is a sequence diagram illustrating the operations of the user terminal 12 and the management server 21 during the provisional registration processing. Fig. 11 is a schematic diagram illustrating an example of the provisional registration DB 2121.

Prior to undergoing the procedures at the boarding gate performed by the information processing system 2, the user obtains the airline application by downloading or the like and stores it in the storage device 122 of the user terminal 12 in an executable manner. When executing the airline application in the user terminal 12, the user can perform an opt-in process and allow the airline company to use the information about the user. In addition, instead of obtaining the airline application by downloading or the like and executing the airline application, the user can access the dedicated site by using a web browser of the user terminal 12, or the like and perform the provisional registration processing of the same content as that by the airline application.

The CPU 120 of the user terminal 12 on which the airline application is executed functions as an acquisition unit, and acquires various kinds of information by accepting the user's input of various kinds of information such as personal information, passport information, payment means information and flight reservation information via the input device 123 (step S2102). The personal information and the payment means information are the same as those in the first example embodiment. The passport information is passport information of the user and includes the passport number when the user boards an international aircraft. The flight reservation information is information about the flight of the aircraft to be boarded for which the user has reserved or purchased the ticket.

Further, the CPU 120 functions as an acquisition unit, and acquires a face image which is the biometric information of the user by capturing the face image of the user by the imaging device 125 (step S2104). Note that the CPU 120 can handle the face image itself captured by the imaging device 125 or the feature amount extracted from the face image as the face information which is the biometric information of the user. The CPU 120 can also read the fingerprint of the user by a fingerprint scanner (not shown) and acquire a fingerprint image or its feature amount as fingerprint information which is the biometric information of the user, in place of the face information or together with the face information.

Note that the CPU 120 may execute either of the steps S2102 and S2104 first regardless of whether the steps S2102 or S2104 are preceding or following, or may execute both of the steps S2102 and S2104 in parallel.

Next, the CPU 120 functions as a transmission unit, and transmits the user information including the personal information, the passport information, the payment means information, the flight reservation information, and the face information about the user acquired as described above to the management server 21 via the network NW2 (step S2106). When the fingerprint information is acquired as the biometric information of the user, the CPU 120 can transmit the user information including the fingerprint information in place of or along with the face information.

Thus, the user can apply for registration of the user information by himself or herself by transmitting the user information from the user terminal 12 held by himself or herself to the management server 21.

When the CPU 210 of the management server 21 receives and acquires the user information from the user terminal 12, the CPU 210 functions as a registration unit, and provisionally registers the acquired user information in the provisional registration DB 2121 (step S2108). At this time, the CPU 210 provisionally registers the user information in the departure date-specific DB 2121d corresponding to the departure date when the user departs from the airport DA by the aircraft based on the flight reservation information included in the user information. Further, the CPU 210 provisionally registers various kinds of information included in the user information in the departure date-specific DB 2121d in association with each other.

Note that the plurality of departure date-specific DBs 2121d need not necessarily to be divided by departure dates on a daily basis, but may be divided by, for example, a multi-day basis, a weekly basis, or the like.

Thus, the CPU 210 provisionally registers the pieces of the user information relating to the plurality of users in the plurality of departure date-specific DBs 2121d in accordance with the flight reservation information.

Fig. 11 illustrates examples of the plurality of the departure date-specific databases 2121d in the provisional registration database 2121 of the management server 21. As illustrated in the figure, the provisional registration DB 2121 includes the plurality of departure date-specific DBs 2121d, which are divided by departure dates specified by the flight reservation information. In each departure date-specific DB 2121d, the user information about each user is provisionally registered for each user ID that is an identifier identifying the plurality of users. The user information provisionally registered in the departure date-specific DB 2121d includes the personal information, the passport information including the passport number, the payment means information, the face information, the flight reservation information, and the like associated with each other. The flight reservation information includes the departure date and the like. The provisionally registered user information may include the fingerprint information as the biometric information.

Next, the operations of the check-in terminal 23 and the management server 21 during the definitive registration processing will be described with reference to Fig. 12 and Fig. 13. Fig. 12 is a sequence diagram illustrating the operations of the check-in terminal 23 and the management server 21 in the definitive registration processing. Fig. 13 is a schematic diagram illustrating an example of the definitive registration DB 2122.

The user whose user information has been provisionally registered in the provisional registration DB 2121 as described above goes to the airport DA on the day of departure of the flight scheduled for boarding input in the flight reservation information, and performs the definitive registration of the user information on the day of departure to board the flight. The user arriving at the airport DA moves first to a check-in lobby where the check-in terminal 23 is installed.

In the check-in terminal 23 which is an automatic check-in terminal, whether or not the user is the user who has provisionally registered the user information is confirmed by the user's input, or the like via the input device 233. When it is confirmed that the user is the user who has provisionally registered the user information, the CPU 230 of the check-in terminal 23 functions as an acquisition unit, and acquires a face image which is the biometric information of the user by capturing the face image of the user by the first imaging device 235 (step S2202). Note that the CPU 230 can handle the face image itself captured by the first imaging device 235 or the feature amount extracted from the face image as the face information which is the biometric information of the user. When the user information including the fingerprint information is provisionally registered, the CPU 230 reads the fingerprint of the user by a fingerprint scanner (not shown) and can acquire a fingerprint image or its feature amount as fingerprint information which is the biometric information of the user in place of the face information or together with the face information.

Next, the CPU 230 functions as a transmission unit, and transmits the face information acquired via the first imaging device 235 to the management server 21 via the network NW2 (step S2204). When the fingerprint information is acquired as the biometric information of the user, the CPU 230 can transmit the user information including the fingerprint information in place of or along with the face information.

Further, the CPU 230 functions as an acquisition unit, and acquires an iris image which is the biometric information of the user by capturing an iris image of the user by the second imaging device 236 (step S2206). When the face image is captured and acquired by the first imaging device 235, the CPU 230 can capture and acquire the iris image by the second imaging device 236. More specifically, the CPU 230 can capture and acquire the iris image by the second imaging device 236 at the same time as or in parallel with capturing and acquiring the face image by the first imaging device 235. The CPU 230 can handle the iris image itself captured by the second imaging device 236 or the feature amount extracted from the iris image as the iris information which is the biometric information of the user. When acquiring the fingerprint information, the CPU 230 can acquire the iris information in parallel with the acquisition of the fingerprint information.

Thus, when the CPU 230 acquires the face information via the first imaging device 235, the CPU 230 also acquires the iris information via the second imaging device 236. Thus, the CPU 230 can efficiently acquire iris information.

Further, the CPU 230 functions as an acquisition unit, and receives the user's input of the passport number via the input device 233 to acquire the passport number (step S2208). The passport number input here functions as a character string used for identity verification. In place of the passport number, the CPU 230 may use another character string such as a date of birth, a telephone number, a flight reservation number, a password, a passphrase, or the like that can be uniquely input by the user. In this case, the user may provisionally register the user information including another character string in the departure date-specific DB 2121d together with the passport number or in place of the passport number.

Next, the CPU 230 functions as a transmission unit, and transmits the passport number acquired via the input device 233 to the management server 21 through the network NW2 (step S2210).

Note that the CPU 230 may execute either of the steps S2202 and S2208 first regardless of whether the steps S2202 or S2208 is preceding or following, or may execute both of the steps S2202 and S2208 in parallel. The CPU 230 can execute the step S2204 following the step S2202 and the step S2210 following the step S2208 at any timing.

On the other hand, the CPU 210 of the management server 21 functions as a matching unit, and executes matching of the face information received and acquired from the check-in terminal 23 (step S2212). At this time, the CPU 210 matches the target face information, which is the face information acquired from the check-in terminal 23, by 1:N with the plurality of registered face information, which is the face information provisionally registered in the departure date-specific DB 2121d corresponding to the departure date of the day when the user comes to the airport DA. The CPU 210 can calculate a matching score corresponding to the similarity between the target face information and the registered face information by matching the feature amount extracted from the face image in matching of the face information. As a result of matching of the face information, the CPU 210 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 210 can execute matching of the fingerprint information in place of the matching of the face information or together with the matching of the face information.

In the present example embodiment, the CPU 210 matches the target face information with the plurality of face information provisionally registered in the departure date-classified DB 2121d corresponding to the departure date on the day when the user comes to the airport DA as a population among the plurality of departure date-classified DBs 2121d. Thus, in the present example embodiment, the population for the matching of the face information is narrowed down by the departure date in accordance with the flight reservation information associated with the face information of the user or the like, so that the face information can be efficiently matched with high accuracy.

Next, the CPU 210 functions as a matching unit, and executes matching of the passport number received and acquired from the check-in terminal 23 (step S2214). At this time, the CPU 210 matches the passport numbers acquired from the check-in terminal 23 with the plurality of passport numbers provisionally registered in the departure date-specific DB 2121d and associated with the upper plurality of pieces of registered face information identified in the step S2212.

Next, the CPU 210 functions as a determination unit, and determines whether the identity verification of the user has succeeded or failed based on matching result of the face information and matching result of the passport number (step S2216). That is, when the CPU finds a passport number matching the passport number acquired from the check-in terminal 23 in the plurality of passport numbers associated with the upper plurality of pieces of registered face information, the CPU 210 determines that the identity verification has been succeeded by matching coincidence of the face information and matching coincidence of the passport number. On the other hand, when the CPU 210 does not find any passport number matching the passport number acquired from the check-in terminal 23 in the plurality of passport numbers associated with the upper plurality of pieces of registered face information, the CPU 210 determines that the identity verification has failed due to mismatch of the passport numbers.

In the present example embodiment, since not only the matching of the face information, but also the matching of the passport number are used to verify the identity of the user, it is possible to verify the identity of the user more reliably. However, it is not necessary to perform matching of the character string such as the passport number, or the like. In this case, the identity can be verified by performing matching of the biometric information such as the face information, or the like.

Note that, for example, when the CPU 210 cannot find the registered face information whose matching score with the target face information is higher than or equal to a predetermined threshold value, the CPU 210 can also determine that the identity verification has failed due to mismatch of the face information without performing matching of the passport number.

When the CPU 210 determines that the identity verification has succeeded (step S2216, YES), the CPU 210 identifies, as the target user information, the user information of the user for the purpose of definitive registration from the departure date-specific DB 2121d (step S2218). The target user information identified by the CPU 210 is the user information including one of the face information of the upper plurality of pieces of registered face information in the order of higher similarity to the target face information and the passport number matching the passport number acquired from the check-in terminal 23.

After the identification of the target user information or when the CPU 210 determines that the identity verification has failed (step S2216, NO), the CPU 210 functions as a transmission unit, and transmits determination result information indicating the determination result of the identity verification to the check-in terminal 23 via the network NW2 (step S2220). The determination result information indicates whether the identity verification has succeeded or has failed. In addition, when the identity verification of the user has succeeded and the target user information is identified, the CPU 210 transmits all or part of the target user information together with the determination result information to the check-in terminal 23 via the network NW2. The CPU 210 can include, for example, the personal information, the face information which is a face image, and the like as a part of the target user information to be transmitted.

When the CPU 230 of the check-in terminal 23 receives and acquires the determination result information from the management server 21, the CPU 230 functions as a determination unit, and determines whether the determination result information indicates that the identity verification has succeeded or has failed (step S2222).

When the CPU 230 determines that the determination result information indicates that the identity verification has failed (step S2222, NO), the CPU 230 executes a corresponding process for the user (step S2224). As the corresponding processing, the CPU 230 can cause the display device 234 to display, for example, a screen for urging the user to re-execute the provisional registration processing using the user terminal 12, a screen for guiding the user to register the user information at the manned check-in counter, and the like.

On the other hand, when the CPU 230 determines that the determination result information indicates that the identity verification has succeeded (step S2222, YES), the CPU 230 displays the personal information among the target user information on the display device 234 (step S2226). The CPU 230 can also display the face image in the target user information.

The user can confirm whether or not the personal information, the face image or the like displayed on the display device 234 belongs to the user himself or herself. The user can input an input indicating whether or not the user has confirmed that the personal information, the face image or the like belongs to the user himself or herself to the check-in terminal 23 via the input device 233.

Next, the CPU 230 functions as a determination unit, and determines whether or not the user has confirmed that the personal information, the face image, or the like belongs to the user himself or herself based on the input via the input device 233 (step S2228).

When the CPU 230 determines that no confirmation has been made (step S2228, NO), the CPU 230 executes the same corresponding processing as described above (step S2224).

On the other hand, when the CPU 230 determines that the confirmation has been made (step S2228, YES), the CPU 230 functions as a transmission unit, and transmits the iris information acquired in the step S2206 to the management server 21 via the network NW2 (step S2230).

When the CPU 210 of the management server 21 receives and acquires the iris information from the check-in terminal 23, the CPU 210 functions as a registration unit, adds the iris information to the target user information, and registers the target user information in the definitive registration DB 2122 (step S2232). At this time, the CPU 210 registers the iris information added to the target user information in association with other information included in the target user information. Thus, the CPU 210 associates the face information and the iris information with each other according to the matching result of the face information and the passport number, and registers the user information including the face information and the iris information in the definitive registration DB 2122.

In the present example embodiment, the iris information required to be acquired by using a dedicated imaging apparatus capable of imaging a near-infrared light region is acquired and registered in the check-in terminal 23. On the other hand, the face information is transmitted from the user terminal 12 different from the check-in terminal 23 to the management server 21 and registered before the registration of the iris information. Therefore, in the present example embodiment, as described later, it is possible to efficiently acquire and register the face information and the iris information which are a plurality of pieces of biometric information used for biometric authentication.

Fig. 13 illustrates an example of the definitive registration DB 2122 of the management server 21. As illustrated in the figure, the user information about each user is registered in the definitive registration DB 2122 for each user ID that is an identifier for identifying the plurality of users. The user information registered in the definitive registration DB 2122 includes the personal information, the passport information including the passport number, the payment means information, the face information, the iris information, the flight reservation information and the like associated with each other. The registered user information may include the fingerprint information as the biometric information.

In the above description, the case where the CPU 210 of the management server 21 performs the matching of the face information and the matching of the passport number during the definitive registration of the user information has been described, but the example embodiment is not limited thereto. For example, the CPU 230 of the check-in terminal 23 may have a function of performing the matching of the face information and the matching of the passport number, and a function of performing the identity verification based on the matching results. In this case, the CPU 230 can refer to the provisional registration DB 2121 of the management server 21 via the network NW2, for example.

Next, the operations of the boarding gate apparatus 24 and the management server 21 during the procedure at the boarding gate will be described with reference to Fig. 14. Fig. 14 is a sequence diagram illustrating the operations of the boarding gate apparatus 24 and the management server 21 at the boarding gate.

The user who has completed the processing at the check-in terminal 23 goes to the boarding gate through, for example, a baggage check-in, a security inspection, a departure inspection, and the like. At the boarding gate, the user boards the aircraft through the boarding gate apparatus 24 which operates as follows.

The CPU 240 of the boarding gate apparatus 24 determines whether or not the user standing in front of the boarding gate apparatus 24 is detected (step S2302). The CPU 240 can detect the user standing in front of the boarding gate apparatus 24 by, for example, the first imaging device 245 constantly capturing in front of the boarding gate apparatus 24, a human sensor (not shown), or the like. The CPU 240 waits until the user is detected (step S2302, NO).

When the CPU 240 determines that the user has been detected (step S2302, YES), the CPU 240 functions as an acquisition unit, and acquires a face image which is the biometric information of the user by capturing the face image of the user by the first imaging device 245 (step S2304). Note that the CPU 240 can handle the face image itself captured by the first imaging device 245 or the feature amount extracted from the face image as the face information which is the biometric information of the user. When the user information including the fingerprint information is definitively registered, the CPU 240 reads the fingerprint of the user by a fingerprint scanner (not shown) and can acquire a fingerprint image or its feature amount as fingerprint information which is the biometric information of the user, in place of the face information or together with the face information.

Further, the CPU 240 functions as an acquisition unit, and acquires an iris image which is the biometric information of the user by capturing the iris image of the user by the second imaging device 246 (step S2306). The CPU 240 can handle the iris image itself captured by the second imaging device 246 or the feature amount extracted from the iris image as iris information which is the biometric information of the user.

Note that the CPU 240 may execute either of the steps S2304 and S2306 first regardless of whether the steps S2304 or S2306 is preceding or following, or may execute both of the steps S2304 and S2306 in parallel.

Next, the CPU 240 functions as a transmission unit, and transmits the face information acquired via the first imaging device 245 and the iris information acquired via the second imaging device 246 to the management server 21 via the network NW2 (step S2308). When the fingerprint information has been acquired, the CPU 240 can transmit the fingerprint information in place of the face information or together with the face information.

On the other hand, the CPU 210 of the management server 21 functions as a matching unit, and executes matching of the face information received and acquired from the boarding gate apparatus 24 (step S2310). At this time, the CPU 210 matches the target face information, which is the face information acquired from the boarding gate apparatus 24, by 1:N with the plurality of registered face information, which is the face information registered in the definitive registration DB 2122. The CPU 210 can calculate a matching score corresponding to the similarity between the target face information and the registered face information by matching the feature amount extracted from the face image in matching of the face information. As a result of the matching of the face information, the CPU 210 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 210 can execute matching of the fingerprint information in place of the matching of the face information or together with the matching of the face information.

The CPU 210 functions as a matching unit, and executes matching of the iris information received and acquired from the boarding gate apparatus 24 (step S2312). At this time, the CPU 210 matches the target iris information, which is the iris information acquired from the boarding gate apparatus 24, by 1:N with the plurality of registered iris information, which is the iris information registered in the definitive registration DB 2122. The CPU 210 can calculate a matching score corresponding to the similarity between the target iris information and the registered iris information by matching the feature amount extracted from the iris information in matching of the iris information. As a result of the matching of the iris information, the CPU 210 identifies an upper plurality of pieces of registered iris information equal to and higher than a predetermined rank in the order of higher similarity to the target iris information, for example, the pieces of the registered iris information of the upper ranks from the first to the tenth.

Note that the CPU 210 may execute either of the steps S2310 and S2312 first regardless of whether the steps S2310 or S2312 is preceding or following, or may execute both of the steps S2310 and S2312 in parallel.

Next, the CPU 210 functions as a determination unit, and determines whether the identity verification of the user has succeeded or failed based on the matching result of the face information and the matching result of the iris information (step S2314). That is, when the CPU 210 finds the user information including both of any of the upper plurality of pieces of registered face information and any of the upper plurality of pieces of registered iris information in the definitive registration DB 2122, the CPU 210 determines that the identity verification has been succeeded by matching coincidence of both the face information and the iris information. On the other hand, when the CPU 210 does not find the user information including both of any of the upper plurality of pieces of registered face information and any of the upper plurality of pieces of registered iris information, the CPU 210 determines that the identity verification has failed due to mismatch of at least one of the face information and the iris information.

When the CPU 210 determines that the identity verification has succeeded by matching of the face information and the iris information, the CPU 210 further determines whether the user has a boarding qualification for the aircraft to be boarded from the boarding gate based on the flight reservation information, or the like included in the discovered user information. As a result, even when the CPU 210 determines that the passenger does not have the boarding qualification, the CPU 210 treats this case as if the identity verification has failed.

Thus, the CPU 210 executes the identity verification of the user by the biometric authentication using the face information and the iris information which are the plurality of biometric information of the user. In the present example embodiment, since the biometric authentication is performed using the plurality of pieces of biometric information, the biometric authentication with high accuracy can be realized even if the number of pieces of user information registered in the definitive registration DB 2122 is enormous. In particular, in the present example embodiment, since the iris information with higher matching accuracy as well as the face information is used for the biometric authentication, the biometric authentication with higher accuracy can be realized.

In the present example embodiment, since the iris information, which is difficult to impersonate by a counterfeit, is used for the biometric authentication, safer biometric authentication can be realized without liveness detection.

Next, the CPU 210 functions as a transmission unit, and transmits determination result information indicating the determination result of the identity verification to the boarding gate apparatus 24 via the network NW2 (step S2316). The determination result information indicates whether the identity verification has succeeded or has failed, and the case where the identity verification failed includes a case where the person is not qualified to board.

When the CPU 240 of the boarding gate apparatus 24 receives and acquires the determination result information from the management server 21, the CPU 240 determines whether the determination result information indicates that the identity verification has succeeded or has failed (step S2318).

When the CPU 240 determines that the determination result information indicates that the identity verification has succeeded (step S2318, YES), the CPU 240 cause the gate 244 to shift to an open state allowing the passage of the user (step S2320). In this case, the CPU 240 may shift the gate 244 from a closed state that blocks the passage of the user during standby to the open state, or may maintain the open state during standby as it is. The user passes through the gate 244 in the open state, passes through the boarding gate apparatus 24, and passes through the boarding gate to board the aircraft.

On the other hand, when the CPU 240 determines that the determination result information indicates that the identity verification has failed (step S2318, NO), the CPU 240 cause the gate 244 to shift to a closed state that blocks the passage of the user (step S2322) . In this case, the CPU 240 may maintain the closed state in the standby state as it is, or may shift the gate 244 from the open state in the standby state to the closed state. In this case, the CPU 240 can execute corresponding processing such as, for example, a process for causing the display device 243 to display a notification requesting confirmation to the user, a process for calling an attendant, or the like.

Thus, according to the present example embodiment, while the iris information is acquired and registered by the check-in terminal 23, the face information is transmitted from the user terminal 12 to the management server 21 and registered before the iris information is registered. Therefore, according to the present example embodiment, the face information and the iris information can be efficiently acquired and registered.

Further, in the present example embodiment, since the biometric authentication is performed using the plurality of pieces of biometric information, the biometric authentication with high accuracy can be realized even if the number of pieces of user information registered in the definitive registration DB 2122 is enormous.

In the above description, the case where the biometric authentication is used for the procedures at the boarding gate where the boarding gate apparatus 24 is installed has been described, but the example embodiment is not limited thereto. For example, when entering a lounge at the airport DA, shopping at a duty-free shop, or using a private service in the country of arrival, identity verification by biometric authentication can be performed as described above. For shopping at a duty-free shop or the like, payment processing can be executed in the same manner as in the case of the first example embodiment based on the payment means information registered in the user information.

In the above description, the case where the CPU 210 of the management server 21 performs the matching of the face information and the matching of the iris information in procedures at the boarding gate has been described, but the example embodiment is not limited thereto. For example, the CPU 240 of the boarding gate apparatus 24 may have a function of performing the matching of the face information and the matching of the iris information, and a function of performing the identity verification based on the matching results. In this case, the CPU 240 can refer to the definitive registration DB 2122 of the management server 21 via the network NW2, for example.

### [Third Example Embodiment]

An information processing system and an information processing method according to a third example embodiment of this disclosure will be described with reference to Fig. 15 to Fig. 21. Note that the same components as those in the information processing system and the information processing method according to the first and second example embodiments described above are labeled with the same references, and the description thereof will be omitted or simplified.

First, the overall configuration of the information processing system according to the present example embodiment will be described with reference to Fig. 15. Fig. 15 is a schematic diagram illustrating the overall configuration of the information processing system according to the present example embodiment.

As illustrated in Fig. 15, the information processing system 3 according to the present example embodiment includes a management server 31, a user terminal 12, an examination terminal 33, and a kiosk terminal 34. The information processing system 3 according to the present example embodiment is a system for providing various services for a user who arrives at the airport AA on an international flight and enters the country by using biometric authentication. In the various services using the biometric authentication, identity verification is performed by the biometric authentication using the biometric information of the user, and biometric authentication payment is performed as necessary.

Note that the various services are not particularly limited and include, for example, use registration service for automated gates at airports, reservation and ticketing service for secondary transportation means such as limousine buses and other transportation means, reservation service for accommodations such as hotels, and the like, regardless of public or private sector of the provider. Hereinafter, a case where the present example embodiment provides a reservation and ticket service for a transportation means will be described.

The management server 31 is installed, for example, in a facility of a management office which manages immigration of the country. The user terminal 12 is an information processing terminal used by a user who is to enter the country from a foreign country. The examination terminal 33 is installed in, for example, an examination booth in an immigration examination area at the airport AA. The kiosk terminal 34 is installed in an arrival lobby at the airport AA, for example.

The management server 31, the user terminal 12, the examination terminal 33 and the kiosk terminal 34 are connected to the network NW3. The network NW3 comprises a WAN, a LAN, a mobile communication network, or the like. The user terminal 12 is configured to connect to the network NW3 by, for example, wireless communication.

The management server 31 and the user terminal 12 can communicate with each other via the network NW3. The management server 31 and the examination terminal 33 can communicate with each other via the network NW3. The management server 31 and the kiosk terminal 34 can communicate with each other via the network NW3.

Next, each component of the information processing system 3 according to the present example embodiment will be described with reference to Fig. 16. Fig. 16 is a block diagram illustrating an example of the hardware configuration of the information processing system 3 according to the present example embodiment.

The management server 31 is an information processing apparatus which manages the information processing system 3 and performs provisional registration and definitive registration of user information, matching of biometric information, and the like. The functions of the management server 31 may be implemented by a single server or by a plurality of servers.

As illustrated in Fig. 16, the management server 31 includes a CPU 310, a RAM 311, a storage device 312, and a communication unit 313. The CPU 310, the RAM 311, the storage device 312, and the communication unit 313 are connected to a bus line 314.

The CPU 310 operates by executing a program stored in the storage device 312 and functions as a control unit for controlling the operation of the entire management server 31. The CPU 310 executes application programs stored in the storage device 312 and executes various processes as the management server 31. The RAM 311 provides a memory area necessary for the operation of the CPU 310.

The storage device 312 is constituted of a storage medium such as a nonvolatile memory, a hard disk drive, or the like and functions as a storage unit. The storage device 312 stores programs executed by the CPU 310, data referred to by the CPU 310 when the programs are executed, and the like.

The storage device 312 stores a provisional registration DB 3121 and a definitive registration DB 3122. The provisional registration DB 3121 is a database for provisionally registering user information including face information among the face information and iris information of the user. The provisional registration DB 3121 includes a plurality of arrival date-specific DBs 3121d divided by arrival dates when users who are to enter the country arrive at the airport AA by aircrafts. The definitive registration DB 3122 is a database in which user information including the face information and the iris information of the user is registered. Note that the provisional registration DB 3121 and the definitive registration DB 3122 may be separate databases or integrated databases.

The communication unit 313 is connected to the network NW3 and transmits and receives data via the network NW3. The communication unit 313 communicates with the user terminal 12, the examination terminal 33, and the kiosk terminal 34 in accordance with the control by the CPU 310.

Thus, the management server 31 is configured.

Next, the user terminal 12 will be described.

The user terminal 12 is as described in the first example embodiment. The storage device 122 stores an application program (Hereinafter referred to as "application for immigrants".) for utilizing various services provided by the information processing system 3 for the immigrants. The CPU 120 can execute various processes for using the various services for the immigrants by executing the application for immigrants. As described later, the user can use the various services for the immigrants without needing the user terminal 12 itself on which the application for immigrants has been executed.

Next, the examination terminal 33 will be described.

The examination terminal 33 is a terminal used by an examiner in an examination booth at an immigration examination area. Note that the examination terminal 33 may be incorporated in an automated gate that omits face-to-face examination by an examiner.

As illustrated in Fig. 16, the examination terminal 33 includes a CPU 330, a RAM 331, a storage device 332, an input device 333, a display device 334, a first imaging device 335, a second imaging device 336, a reading device 337, and a communication unit 338. The CPU 330, the RAM 331, the storage device 332, the input device 333, the display device 334, the first imaging device 335, the second imaging device 336, the reading device 337, and the communication unit 338 are connected to a bus line 339.

The CPU 330 operates by executing a program stored in the storage device 332 and functions as a control unit for controlling the operation of the entire examination terminal 33. The CPU 330 executes application programs stored in the storage device 332 to execute various processes as the examination terminal 33. The RAM 331 provides a memory area necessary for the operation of the CPU 330.

The storage device 332 is constituted of a storage medium such as a nonvolatile memory, a hard disk drive, or the like and functions as a storage unit. The storage device 332 stores programs executed by the CPU 330, data referred to by the CPU 330 when the programs are executed, and the like. The storage device 332 can store information input from the input device 333. The storage device 332 can store image data captured by the first imaging device 335 and the second imaging device 336.

The input device 333 functions as an input unit for receiving input from the examiner or the user. The examiner or the user can input various kinds of information or instructions to execute processing to the examination terminal 33 via the input device 333. The input device 333 is, for example, a touch panel incorporated in the display device, a keyboard, or the like 334.

The display device 334 functions as a display unit for displaying various screens to the examiner or the user. The display device 334 may have, for example, two screens, one on the examiner's side and the other on the immigrant's side. The display device 334 displays various screens in accordance with the control by the CPU 330.

The first imaging device 335 functions as a biometric information acquisition unit for capturing and acquiring a face image of the user as biometric information of the user. The first imaging device 335 is, for example, an imaging device such as a digital camera capable of capturing a visible light region. The first imaging device 335 captures and acquires the face image of the user in accordance with the control by the CPU 330.

The second imaging device 336 functions as a biometric information acquisition unit for capturing and acquiring an iris image of a user as biometric information of the user. The second imaging device 336 is, for example, an imaging device such as a digital camera capable of capturing a near-infrared light region. The second imaging device 336 may have an infrared illuminator for irradiating near-infrared light to an object to be captured. The second imaging device 336 captures and acquires the iris image of the user in accordance with the control by the CPU 330.

The first imaging device 335 and the second imaging device 336 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The reading device 337 functions as an information acquisition unit for acquiring information recorded in a passport, or the like by reading the passport, or the like of the user. The reading device 337 includes, for example, a code reader, an image scanner, a non-contact IC reader, an OCR device, and the like.

The communication unit 338 is connected to the network NW3 and transmits and receives data via the network NW3. The communication unit 338 communicates with the management server 31 in accordance with the control by the CPU 330.

Thus, the examination terminal 33 is configured.

Next, the kiosk terminal 34 will be described.

The kiosk terminal 34 is a ticket reservation terminal which is operated by the user himself or herself to perform reservation and ticketing of a ticket for a transportation means. The kiosk terminal 34 can also make a reservation for an accommodation facility or the like.

As illustrated in Fig. 16, the kiosk terminal 34 includes a CPU 340, a RAM 341, a storage device 342, an input device 343, a display device 344, a first imaging device 345, a second imaging device 346, a ticketing device 347, and a communication unit 348. The CPU 340, the RAM 341, the storage device 342, the input device 343, the display device 344, the first imaging device 345, the second imaging device 346, the ticketing device 347 and the communication part 348 are connected to a bus line 349.

The CPU 340 operates by executing a program stored in the storage device 342 and functions as a control unit for controlling the operation of the entire kiosk terminal 34. The CPU 340 executes application programs stored in the storage device 342 to execute various processes as the kiosk terminal 34. The RAM 341 provides a memory area necessary for the operation of the CPU 340.

The storage device 342 is constituted of a storage medium such as a nonvolatile memory, a hard disk drive, or the like and functions as a storage unit. The storage device 342 stores programs executed by the CPU 340, data referred to by the CPU 340 when the programs are executed, and the like. The storage device 342 can store information input from the input device 343. The storage device 342 can store image data captured by the first imaging device 345 and the second imaging device 346.

The input device 343 functions as an input unit for receiving input from the user. The user can input various kinds of information or input instructions for execution of processing to the kiosk terminal 34 via the input device 343. The input device 343 is, for example, a touch panel incorporated in the display device, a keyboard, or the like 344.

The display device 344 functions as a display unit for displaying various screens to the user. The display device 344 displays various screens in accordance with the control by the CPU 340.

The first imaging device 345 functions as a biometric information acquisition unit for capturing and acquiring a face image of the user as biometric information of the user. The first imaging device 345 is, for example, an imaging device such as a digital camera capable of capturing a visible light region. The first imaging device 345 captures and acquires the face image of the user in accordance with the control by the CPU 340.

The second imaging device 346 functions as a biometric information acquisition unit for capturing and acquiring an iris image of the user as biometric information of the user. The second imaging device 346 is, for example, an imaging device such as a digital camera capable of capturing a near-infrared light region. The second imaging device 346 may have an infrared illuminator for irradiating near-infrared light to an object to be captured. The second imaging device 346 captures and acquires the iris image of the user in accordance with the control by the CPU 340.

The first imaging device 345 and the second imaging device 346 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The ticketing device 347 issues the ticket of the transportation means reserved by the user in accordance with the control by the CPU 340.

The communication unit 348 is connected to the network NW3 and transmits and receives data via the network NW3. The communication unit 348 communicates with the management server 31 in accordance with the control by the CPU 340.

Thus, the kiosk terminal 34 is configured.

Hereinafter, the operation of each component in the information processing system 3 according to the present example embodiment will be described with reference to Fig. 17 to Fig. 21. As each component operates, an information processing method according to the present example embodiment is executed.

First, the operations of the user terminal 12 and the management server 31 during the provisional registration processing will be described with reference to Fig. 17 and Fig. 18. Fig. 17 is a sequence diagram illustrating the operations of the user terminal 12 and the management server 31 during the provisional registration processing. Fig. 18 is a schematic diagram illustrating an example of the provisional registration DB 3121.

Prior to receiving the reservation ticketing service provided by the information processing system 3, the user acquires the application for immigrant by downloading or the like and stores it in the storage device 122 of the user terminal 12 in an executable manner. When executing the application for immigrants, the user can perform the opt-in process and allow the provider of the various services to use the information about the user. In addition, instead of obtaining the application for the immigrants by downloading or the like and executing the application for the immigrants, the user can access the dedicated site by using a web browser of the user terminal 12, or the like and perform the provisional registration processing of the same contents as the case of using the application for immigrants.

The CPU 120 of the user terminal 12 on which the application for immigrants has been executed, functions as an acquisition unit, and acquires various types of information by accepting the user's input of various types of information such as personal information, passport information, payment means information, and flight information via the input device 123 (step S3102). The personal information and the payment means information are the same as those in the first example embodiment. The passport information is the passport information of the user and includes the passport number. The flight information is information about the flight of the aircraft on which the user enters the country.

Further, the CPU 120 functions as an acquisition unit, and acquires a face image which is the biometric information of the user by capturing the face image of the user by the imaging device 125 (step S3104). Note that the CPU 120 can handle the face image itself captured by the imaging device 125 or the feature amount extracted from the face image as the face information which is the biometric information of the user. The CPU 120 can also read the fingerprint of the user by a fingerprint scanner (not shown) and acquire a fingerprint image or its feature amount as fingerprint information which is the biometric information of the user, in place of the face information or together with the face information.

Note that the CPU 120 may execute either of the steps S3102 and S3104 first regardless of whether the steps S3102 or S3104 is preceding or following, or may execute both of the steps S3102 and S3104 in parallel.

Next, the CPU 120 functions as a transmission unit, and transmits the user information including the personal information, the passport information, the payment means information, the flight information, and the face information about the user acquired as described above to the management server 31 via the network NW3 (step S3106). When the fingerprint information is acquired as the biometric information of the user, the CPU 120 can transmit the user information including the fingerprint information in place of or along with the face information.

Thus, the user can apply for registration of the user information by himself or herself by transmitting the user information from the user terminal 12 held by himself or herself to the management server 31.

When the CPU 310 of the management server 31 receives and acquires the user information from the user terminal 12, the CPU 310 functions as a registration unit, and provisionally registers the acquired user information in the provisional registration DB 3121 (step S3108). At this time, the CPU 310 provisionally registers the user information in the arrival date-specific DB 3121d corresponding to an arrival date when the user arrives at the airport by an aircraft based on the flight information included in the user information. Further, the CPU 310 provisionally registers various kinds of information included in the user information in the arrival date-specific DB 3121d in association with each other.

Note that the plurality of arrival date-specific DB 3121d need not necessarily to be divided by arrival dates on a daily basis, but may be divided by, for example, a multi-day basis, a weekly basis, or the like.

Thus, the CPU 310 provisionally registers the pieces of the user information relating to the plurality of users in the plurality of arrival date-specific DB 3121d in accordance with the flight reservation information.

Fig. 18 illustrates examples of the plurality of the arrival date-specific DBs 3121d in the provisional registration DB 3121 of the management server 31. As illustrated in the figure, the provisional registration DB 3121 includes the plurality of the arrival date-specific DBs 3121d divided by arrival dates specified by the flight information. In each arrival date-specific DB 3121d, the user information about each user is provisionally registered for each user ID that is an identifier identifying the plurality of users. The user information provisionally registered in the date-specific DB 3121d includes the personal information, the passport information including the passport number, the payment means information, the face information, the flight information, and the like associated with each other. The flight information includes the arrival date and the like. The provisionally registered user information may include the fingerprint information as the biometric information.

Next, the operations of the examination terminal 33 and the management server 31 during the definitive registration processing will be described with reference to Fig. 19 and Fig. 20. Fig. 19 is a sequence diagram illustrating the operations of the examination terminal 33 and the management server 31 during the definitive registration processing. Fig. 20 is a schematic diagram illustrating an example of the definitive registration DB 3122.

When the user whose user information has been provisionally registered in the provisional registration DB 3121 as described above arrives at the airport AA on the flight input in the flight information, the user moves to the immigration examination area and undergoes an immigration examination at an examination booth.

In the examination terminal 33, whether or not the user is the user who has provisionally registered the user information is confirmed by input via the input device 333 by the examiner operating the examination terminal 33 or the user himself or herself. When it is confirmed that the user is the user who has provisionally registered the user information, the CPU 330 of the examination terminal 33 functions as an acquisition unit, and acquires a face image which is the biometric information of the user by capturing the face image of the user by the first imaging device 335 (step S3202). Note that the CPU 330 can handle the face image itself captured by the first imaging device 335 or the feature amount extracted from the face image as the face information which is the biometric information of the user. When the user information including the fingerprint information is provisionally registered, the CPU 330 reads the fingerprint of the user by a fingerprint scanner (not shown) and can acquire a fingerprint image or its feature amount as fingerprint information which is the biometric information of the user in place of the face information or together with the face information.

Next, the CPU 330 functions as a transmission unit, and transmits the face information acquired via the first imaging device 335 to the management server 31 via the network NW3 (step S3204). When the fingerprint information is acquired as the biometric information of the user, the CPU 330 can transmit the user information including the fingerprint information in place of or along with the face information.

Further, the CPU 330 functions as an acquisition unit, and acquires an iris image which is the biometric information of the user by capturing the iris image of the user by the second imaging device 336 (step S3206). When the face image is captured and acquired by the first imaging device 335, the CPU 330 can capture and acquire an iris image by the second imaging device 336. More specifically, the CPU 330 can capture and acquire the iris image by the second imaging device 336 at the same time as or in parallel with capturing and acquiring the face image by the first imaging device 335. The CPU 330 can handle the iris image itself captured by the second imaging device 336 or the feature amount extracted from the iris image as the iris information which is the biometric information of the user. When acquiring the fingerprint information, the CPU 330 can acquire the iris information in parallel with the acquisition of the fingerprint information.

Thus, when the CPU acquires the face information via the first imaging device 335, the CPU 330 also acquires the iris information via the second imaging device 336. Thus, the CPU 330 can efficiently acquire iris information.

Further, the CPU 330 functions as an acquisition unit, and receives the user's input of the passport number via the input device 333 to acquire the passport number (step S3208). The passport number input here functions as a character string used for identity verification. In place of the passport number, the CPU 330 may use another character string such as a date of birth, a telephone number, a password, a passphrase, or the like that can be uniquely input by the user. In this case, the user may provisionally register the user information including another character string in the arrival date-specific DB 3121d together with the passport number or in place of the passport number.

Next, the CPU 330 functions as a transmission unit, and transmits the passport number acquired via the input device 333 to the management server 31 through the network NW3 (step S3210).

Note that the CPU 330 may execute either of the steps S3202 and S3208 first regardless of whether the steps S3202 or S3208 is preceding or following, or may execute both of the steps S3202 and S3208 in parallel. The CPU 330 can execute the step S2304 following the step S3202 and the step S3210 following the step S3208 at any timing.

On the other hand, the CPU 310 of the management server 31 functions as a matching unit, and executes matching of the face information received and acquired from the examination terminal 33 (step S3212). At this time, the CPU 310 matches the target face information, which is the face information acquired from the examination terminal 33, by 1:N with the plurality of registered face information, which is the face information provisionally registered in the arrival date-specific DB 3121d corresponding to the arrival date of the day when the user arrives at the airport AA. The CPU 310 can calculate a matching score corresponding to the similarity between the target face information and the registered face information by matching the feature amount extracted from the face image in matching of the face information. As a result of matching of the face information, the CPU 310 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 310 can execute matching of the fingerprint information in place of the matching of the face information or together with the matching of the face information.

In the present example embodiment, the CPU 310 matches the target face information with the plurality of face information provisionally registered in the arrival date-specific DB 3121d corresponding to the arrival date of the day when the user arrives at the airport AA as a population among the plurality of arrival date-specific DBs 3121d. Thus, in the present example embodiment, the population for the matching of face information is narrowed down by the arrival date in accordance with the flight information associated with the face information of the user or the like, so that the face information can be efficiently matched with high accuracy.

Next, the CPU 310 functions as a matching unit, and executes matching of the passport number received and acquired from the examination terminal 33 (step S3214). At this time, the CPU 310 matches the passport numbers acquired from the examination terminal 33 with the plurality of passport numbers provisionally registered in the arrival date-specific DB 3121d and associated with the upper plurality of pieces of registered face information identified in the step S3212.

Next, the CPU 310 functions as a determination unit, and determines whether the identity verification of the user has succeeded or failed based on matching result of the face information and matching result of the passport number (step S3216). That is, when the CPU finds a passport number matching the passport number acquired from the examination terminal 33 in the plurality of passport numbers associated with the upper plurality of pieces of registered face information, the CPU 310 determines that the identity verification has been succeeded by matching coincidence of the face information and matching coincidence of the passport number. On the other hand, when the CPU 310 does not find any passport number matching the passport number acquired from the examination terminal 33 in the plurality of passport numbers associated with the upper plurality of pieces of registered face information, the CPU determines that the identity verification has failed due to mismatch of the passport numbers.

In the present example embodiment, since not only the matching of the face information, but also the matching of the passport number are used to verify the identity of the user, it is possible to verify the identity of the user more reliably. However, it is not necessary to perform matching of the character string such as the passport number. In this case, the identity can be verified by performing matching of the biometric information such as the face information, or the like.

Note that, for example, when the CPU 310 cannot find the registered face information whose matching score with the target face information is higher than or equal to a predetermined threshold value, the CPU 310 can also determine that the identity verification has failed due to mismatch of the face information without performing matching of the passport number.

When the CPU 310 determines that the identity verification has succeeded (step S3216, YES), the CPU 310 identifies, as the target user information, the user information of the user for the purpose of definitive registration from the arrival date-specific database 3121d (step S3218). The target user information identified by the CPU 310 is the user information including one of the face information of the upper plurality of pieces of registered face information in the order of higher similarity to the target face information and the passport number matching the passport number acquired from the examination terminal 33.

After the identification of the target user information or when the CPU 310 s determines that the identity verification has failed (step S3216, NO), the CPU 310 functions as a transmission unit, and transmits determination result information indicating the determination result of the identity verification to the examination terminal 33 via the network NW3 (step S3220). The determination result information indicates whether the identity verification has succeeded or has failed. In addition, when the identity verification of the user has succeeded and the target user information is identified, the CPU 310 transmits all or part of the target user information together with the determination result information to the examination terminal 33 via the network NW3. The CPU 310 can include, for example, personal information, face information which is a face image, and the like as a part of the target user information to be transmitted.

When the CPU 330 of the examination terminal 33 receives and acquires the determination result information from the management server 31, the CPU 330 functions as a determination unit, and determines whether the determination result information indicates that the identity verification has succeeded or has failed (step S3222).

When the CPU 330 determines that the determination result information indicates that the identity verification has failed (step S3222, NO), the CPU 330 executes a corresponding process for the user (step S3224). The CPU 330 can cause the display device 334 to display, for example, a screen for urging the user to re-execute the provisional registration processing using the user terminal 12, a screen for guiding the user to register the user information at the examination booth or the dedicated booth.

On the other hand, when the CPU 330 determines that the determination result information indicates that the identity verification has succeeded (step S3222, YES), the CPU 330 displays the personal information among the target user information on the display device 334 (step S3226). The CPU 330 can also display the face image in the target user information.

The user or the examiner can confirm whether or not the personal information, the face image or the like displayed on the display device 334 belongs to the user himself or herself. The examiner may, for example, confirm that the displayed personal information, the face image, or the like belongs to the user himself or herself through conversation with the user, visual observation of the user's face, confirmation of the contents of the passport presented by the user, or the like. The user or the examiner can input an input indicating whether or not the user or the examiner has confirmed that the personal information, the face image, or the like belongs to the user himself or herself to the examination terminal 33 via the input device 333.

Next, the CPU 330 functions as a determination unit, and determines whether or not the user or the examiner has confirmed that the personal information, the face image, or the like belongs to the user himself or herself based on the input via the input device 333 (step S3228).

When the CPU 330 determines that no confirmation has been made (step S3228, NO), the CPU 330 executes the same corresponding processing as described above (step S3224).

On the other hand, when the CPU 330 determines that the confirmation has been made (step S3228, YES), the CPU 330 functions as a transmission unit, and transmits the iris information acquired in the step S3206 to the management server 31 via the network NW3 (step S3230).

When the CPU 310 of the management server 31 receives and acquires the iris information from the examination terminal 33, the CPU functions as a registration unit, adds the iris information to the target user information, and registers the target user information in the definitive registration DB 3122 (step S3232). At this time, the CPU 310 registers the iris information added to the target user information in association with other information included in the target user information. Thus, the CPU 310 associates the face information and the iris information with each other according to the matching result of the face information and the passport number, and registers the user information including the face information and the iris information in the definitive registration DB 3122.

In the present example embodiment, the iris information required to be acquired by using a dedicated imaging device capable of imaging a near-infrared light region is acquired and registered in the examination terminal 33. On the other hand, the face information is transmitted from the user terminal 12 different from the examination terminal 33 to the management server 31 and registered before the registration of the iris information. Therefore, in the present example embodiment, as described later, it is possible to efficiently acquire and register the face information and the iris information which are a plurality of pieces of biometric information used for biometric authentication.

Fig. 20 illustrates an example of the definitive registration DB 3122 of the management server 31. As illustrated in the figure, the user information about each user is registered in the definitive registration DB 3122 for each user ID that is an identifier for identifying the plurality of users. The user information registered in the definitive registration DB 3122 includes the personal information, the passport information including the passport number, the payment means information, the face information, the iris information, the flight information and the like associated with each other. The registered user information may include the fingerprint information as the biometric information.

In the above description, the case where the CPU 310 of the management server 31 performs the matching of the face information and the matching of the passport number during the definitive registration of the user information has been described, but the example embodiment is not limited thereto. For example, the CPU 330 of the examination terminal 33 may have a function of performing the matching of the face information and the matching of the passport number, and a function of performing the identity verification based on the matching results. In this case, the CPU 330 can refer to the provisional registration DB 3121 of the management server 31 via the network NW3, for example.

Next, the operations of the kiosk terminal 34 and the management server 31 in the reservation and ticketing processing will be described with reference to Fig. 21. Fig. 21 is a sequence diagram illustrating the operations of the kiosk terminal 34 and the management server 31 during reservation and ticketing processing.

The user who has completed the immigration examination at the examination booth can, for example, perform reservation and ticketing for a transportation means at the kiosk terminal 34 installed in the arrival lobby of the airport AA. In this case, the user can pay the fare of the transportation means by using the biometric authentication payment.

The CPU 340 of a kiosk terminal 34 displays details such as a timetable of a transportation means, a fare, a destination, and the like, and waits for designation of a seat, and the like of the transportation means by the user through the input device 343. When the reservation of the transportation means is designated by the user, the CPU 340 generates reservation information desired by the user according to the designation (step S3302).

Next, the CPU 340 determines whether or not the biometric authentication payment has been selected as the payment method of the transportation fare (step S3304). The CPU 340 can determine whether or not the biometric authentication payment has been selected based on the user's input via the input device 343.

When the CPU 340 determines that the biometric authentication payment is not selected (step S3304, NO), the CPU 340 executes processing for other payment methods (step S3306). Other payment methods include, for example, cash payment, credit card payment using a credit card actually presented by the user.

On the other hand, the CPU 340 determines that the biometric authentication payment is selected (step S3304, YES), the CPU 340 functions as an acquisition unit, and acquires a face image which is the biometric information of the user by capturing the face image of the user by the first imaging device 345 (step S3308). Note that the CPU 340 can handle the face image itself captured by the first imaging device 345 or the feature amount extracted from the face image as the face information which is the biometric information of the user. When the user information including the fingerprint information is definitively registered, the CPU 340 reads the fingerprint of the user by a fingerprint scanner (not shown) and can acquire a fingerprint image or its feature amount as fingerprint information which is the biometric information of the user, in place of the face information or together with the face information.

Further, the CPU 340 functions as an acquisition unit, and acquires an iris image which is the biometric information of the user by capturing the iris image of the user by the second imaging device 346 (step S3310). The CPU 340 can handle the iris image itself captured by the second imaging device 346 or the feature amount extracted from the iris image as iris information which is the biometric information of the user.

Note that the CPU 340 may execute either of the steps S3308 and S3310 first regardless of whether the steps S3308 or S3310 is preceding or following, or may execute both of the steps S3308 and S3310 in parallel.

Next, the CPU 340 functions as a transmission unit, and transmits the face information acquired via the first imaging device 345 and the iris information acquired via the second imaging device 346 to the management server 31 via the network NW3 (step S3312). When the fingerprint information has been acquired, the CPU 340 can transmit the fingerprint information in place of the face information or together with the face information.

On the other hand, the CPU 310 of the management server 31 functions as a matching unit, and executes matching of the face information received and acquired from the kiosk terminal 34 (step S3314). At this time, the CPU 310 matches the target face information, which is the face information acquired from the kiosk terminal 34, by 1:N with the plurality of registered face information, which is the face information registered in the definitive registration DB 3122. The CPU 310 can calculate a matching score corresponding to the similarity between the target face information and the registered face information by matching the feature amount extracted from the face image in matching of the face information. As a result of the matching of the face information, the CPU 310 an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 310 can execute matching of the fingerprint information in place of the matching of the face information or together with the matching of the face information.

The CPU 310 functions as a matching unit, and executes matching of the iris information received and acquired from the kiosk terminal 34 (step S3316). At this time, the CPU 310 matches the target iris information, which is the iris information acquired from the kiosk terminal 34, by 1: N with the plurality of registered iris information, which is iris information registered in the definitive registration DB 3122. The CPU 310 can calculate a matching score corresponding to the similarity between the target iris information and the registered iris information by matching the feature amount extracted from the iris information in matching of the iris information. As a result of the matching of the iris information, the CPU 310 identifies an upper plurality of pieces of registered iris information equal to and higher than a predetermined rank in the order of higher similarity to the target iris information, for example, the pieces of the registered iris information of the upper ranks from the first to the tenth.

Note that the CPU 310 may execute either of the steps S3314 and S3316 first regardless of whether the steps S3314 or S3316 is preceding or following, or may execute both of the steps S3314 and S3316 in parallel.

Next, the CPU 310 functions as a determination unit, and determines whether the identity verification of the user has succeeded or failed based on the matching result of the face information and the matching result of the iris information (step S3318). That is, when the CPU finds the user information including both of any of the upper plurality of pieces of registered face information and any of the upper plurality of pieces of registered iris information in the definitive registration DB 3122, the CPU 310 determines that the identity verification has been succeeded by matching coincidence of both the face information and the iris information. On the other hand, when the CPU does not find the user information including both of any of the upper plurality of pieces of registered face information and any of the upper plurality of pieces of registered iris information, the CPU 310 determines that the identity verification has failed due to mismatch of at least one of the face information and the iris information.

When the CPU 310 determines that the identification has succeeded (step S3318, YES), the CPU 310 identifies the target user information for the payment processing described later (step S3320). The target user information is user information including both any of the upper plurality of pieces of registered face information and any of the upper plurality of pieces of registered iris information.

Thus, the CPU 310 executes the identity verification of the user by the biometric authentication using the face information and the iris information which are the plurality of biometric information of the user. In the present example embodiment, since the biometric authentication is performed using the plurality of pieces of biometric information, the biometric authentication with high accuracy can be realized even if the number of pieces of user information registered in the definitive registration DB 3122 is enormous. In particular, in the present example embodiment, since the iris information with higher matching accuracy as well as the face information is used for the biometric authentication, the biometric authentication with higher accuracy can be realized.

In the present example embodiment, since the iris information, which is difficult to impersonate by a counterfeit, is used for the biometric authentication, safer biometric authentication can be realized without liveness detection.

After the identification of the target user information or when the CPU 310 determines that the identity verification has failed (step S3318, NO), the CPU 310 functions as a transmission unit, and transmits determination result information indicating the determination result of the identity verification to the kiosk terminal 34 via the network NW3 (step S3322). The determination result information indicates whether the identity verification has succeeded or has failed.

When the CPU 340 of the kiosk terminal 34 receives and acquires the determination result information from the management server 31, the CPU 340 functions as a determination unit, and determines whether the determination result information indicates that the identity verification has succeeded or has failed (step S3324).

When the CPU 340 determines that the determination result information indicates that the identity verification has failed (step S3324, NO), the CPU 340 executes the same processing as described above for other payment methods (step S3306).

On the other hand, when the CPU 340 determines that the determination result information indicates that the identity verification has succeeded (step S3324, YES), the CPU 340 transmits the reservation information of the transportation means and a payment request of the fare to the management server 31 via the network NW3 (step S3326).

The CPU 340 can also transmit the reservation information to the management server 31 in advance. For example, the CPU 340 may transmit the reservation information together with the face information and the iris information to the management server 31 in the step S3312. In this case, when the CPU 310 of the management server 31 determines that the user's identity has been successfully verified by matching of the face information and matching of the iris information, the CPU 310 can skip the transmission of the determination result information in the step S3322 and proceed to the payment processing in the step S3328. The CPU 340 of the kiosk terminal 34 can skip steps 3324 and 3326.

When the CPU 310 of the management server 31 receives and acquires the reservation information of the transportation means and the payment request of the fare from the kiosk terminal 34, the CPU 310 functions as a payment processing unit, and executes the payment processing of the fare (step S3328). The CPU 310 executes the payment processing of the fare based on the payment means information included in the target user information. The CPU 310 can execute the payment processing by requesting the payment processing to the server of the payment institution, for example. In the payment processing, the payment of the purchase object can be completed by the payment means indicated in the payment means information, or the payment of the purchase object cannot be completed due to the expiration of the validity of the payment means.

In the present example embodiment, the CPU 310 cannot execute the payment processing when the face information among the face information and the iris information is provisionally registered. On the other hand, as described above, the CPU 310 can execute the payment processing when the identity verification has succeeded based on the matching result of the face information and the iris information after the time when the face information and the iris information are definitively registered.

Note that the CPU 310 may be configured to execute the payment processing even when the face information among the face information and the iris information is provisionally registered. In this case, for example, in the same manner as in the case illustrated in Fig. 19, the CPU 310 can be configured to perform the identity verification by performing matching of the face information and matching of the character string such as the passport number, and to execute the payment processing in the same manner as in the case where the identity verification based on matching result of the face information and the character string has succeeded. With this configuration, the payment processing can be executed even before the registration of the iris information, and its accuracy can be secured. In this case as well, the CPU 310 can be configured to execute the payment processing when the identity verification has succeeded based on the matching result of the face information and the iris information after the time when the face information and the iris information are registered.

Next, the CPU 310 functions as a transmission unit, and transmits payment result information indicating the payment result of the purchase object to the kiosk terminal 34 via the network NW3 (step S3330). The payment result information indicates whether the payment of the purchase target has been completed or not.

When the CPU 340 of the kiosk terminal 34 receives and acquires the payment result information from the management server 31, the CPU functions as a determination unit, and determines whether the payment result information indicates that the payment can be completed or not (step S3332).

When the CPU 340 determines that the payment result information indicates that the payment cannot be completed (step S3332, NO), the CPU 340 executes the same processing as described above for other payment methods (step S3306).

On the other hand, when the CPU determines that the payment result information indicates that the payment can be completed (step S3332, YES), the CPU 340 notifies the user that the payment of the fare has been completed by the biometric authentication payment (step S3334). For example, the CPU 340 can display on the display device 344 a screen indicating that the payment of the fare has been completed by the biometric authentication payment, or output a message voice or sound effect indicating that the payment has been completed from an audio output device (not shown) to notify the user.

Next, the CPU 340 issues a ticket for using the reserved transportation means by the ticketing device 347 (step S3336) .

Thus, according to the present example embodiment, while the iris information is acquired and registered by the examination terminal 33, the face information is transmitted from the user terminal 12 to the management server 31 and registered before the iris information is registered. Therefore, according to the present example embodiment, the face information and the iris information can be efficiently acquired and registered.

Further, in the present example embodiment, since the biometric authentication is performed using the plurality of pieces of biometric information, the biometric authentication with high accuracy can be realized even if the number of pieces of user information registered in the definitive registration DB 3122 is enormous.

In the above description, the case where the biometric authentication is used for the reservation and ticketing service by the kiosk terminal 34 has been described, the example embodiment is not limited thereto. For example, when shopping at duty-free shops or using private services in the country concerned, the identity verification by the biometrics can be performed as described above. For shopping at a duty-free shop or the like, payment processing can be executed in the same manner as in the case of the first example embodiment based on the payment means information registered in the user information.

In the above description, the case where the CPU 310 of the management server 31 performs the matching of the face information and the matching of the iris information during the reservation and ticketing has been described, but the example embodiment is not limited thereto. For example, the CPU 340 of the kiosk terminal 34 may have a function of performing the matching of the face information and the matching of the iris information, and a function of performing the identity verification based on the matching results. In this case, the CPU 340 can refer to the definitive registration DB 3122 of the management server 31 via the network NW3, for example.

### [Fourth example embodiment]

An information processing system and an information processing method according to a fourth example embodiment of this disclosure will be described with reference to Fig. 22 to Fig. 28. Note that the same components as those in the information processing system and the information processing method according to the first to third example embodiments described above are labeled with the same references, and the description thereof will be omitted or simplified.

First, the overall configuration of the information processing system according to the present example embodiment will be described with reference to Fig. 22. Fig. 22 is a schematic diagram illustrating the overall configuration of the information processing system according to the present example embodiment.

As illustrated in Fig. 22, the information processing system 4 according to the present example embodiment includes a management server 41, a user terminal 12, a ticketing machine terminal 43, and an automatic ticket checker 44. The information processing system 4 according to the present example embodiment is a system for performing procedures at a ticket gate using biometric authentication for a user who is a passenger boarding a railway at a station ST. In the procedures at the ticket gate using the biometric information, the propriety of passing through the ticket gate is determined by the biometric authentication using the biometric information of the user.

The management server 41 is installed in a facility such as a railway company operating a train, for example. The user terminal 12 is an information processing terminal used by a user who is a passenger of a train. The ticketing machine terminal 43 is installed, for example, at a ticketing area outside the ticket gate of the station ST. The automatic ticket checker 44 is installed at the ticket gate of the station ST.

The management server 41, the user terminal 12, the ticketing machine terminal 43, and the automatic ticket checker 44 are connected to the network NW4. The network NW4 includes a WAN, a LAN, a mobile communication network, or the like. The user terminal 12 is configured to connect to the network NW4 by wireless communication, for example.

The management server 41 and the user terminal 12 can communicate with each other via the network NW4. The management server 41 and the ticketing machine terminal 43 can communicate with each other via the network NW4. The management server 41 and the automatic ticket checker 44 can communicate with each other via the network NW4.

Next, each component of the information processing system 4 according to the present example embodiment will be described with reference to Fig. 23. Fig. 23 is a block diagram illustrating an example of the hardware configuration of the information processing system 4 according to the present example embodiment.

First, the management server 41 will be described.

The management server 41 is an information processing apparatus that manages the information processing system 4 and performs provisional registration and definitive registration of user information, matching of biometric information, and the like. The functions of the management server 41 may be implemented by a single server or by a plurality of servers.

As illustrated in Fig. 23, the management server 41 includes a CPU 410, a RAM 411, a storage device 412, and a communication unit 413. The CPU 410, the RAM 411, the storage device 412, and the communication unit 413 are connected to a bus line 414.

The CPU 410 operates by executing a program stored in the storage device 412 and functions as a control unit for controlling the operation of the entire management server 41. The CPU 410 executes application programs stored in the storage device 412 and executes various processes as the management server 41. The RAM 411 provides a memory area necessary for the operation of the CPU 410.

The storage device 412 is constituted of a storage medium such as a nonvolatile memory, a hard disk drive, or the like and functions as a storage unit. The storage device 412 stores programs executed by the CPU 410, data referred to by the CPU 410 when the programs are executed, and the like.

The storage device 412 stores a provisional registration DB 4121 and a definitive registration DB 4122. The provisional registration DB 4121 is a database for provisionally registering user information including face information among the face information and iris information of the user. The provisional registration DB 4121 includes a plurality of nearest station-specific DB 4121d divided by nearest stations of users who become passengers. The definitive registration DB 4122 is a database in which user information including face information and iris information of the user is registered. Note that the provisional registration DB 4121 and the definitive registration DB 4122 may be separate databases or integrated databases.

The communication unit 413 is connected to the network NW4 and transmits and receives data via the network NW4. The communication unit 413 communicates with the user terminal 12, the ticketing machine terminal 43, and the automatic ticket checker 44 in accordance with the control by the CPU 410.

Thus, the management server 41 is configured.

Next, the user terminal 12 will be described.

The user terminal 12 is as described in the first example embodiment. The storage device 122 stores an application program (Hereinafter referred to as "railway company application") for undergoing procedures performed by the information processing system 4 at the ticket gate. By executing the railway company application, the CPU 120 can execute various processes for the user to undergo the procedures at the ticket gate. As will be described later, the user can undergo the procedures at the ticket gate without needing the user terminal 12 itself on which the railway company application is executed.

Next, the ticketing machine terminal 43 will be described.

The ticketing machine terminal 43 is an automatic ticketing machine terminal which the user operates to purchase various kinds of tickets such as commuter tickets, an ordinary ticket, or the like. The ticketing machine terminal 43 may be a ticketing machine terminal installed at a manned window and operated by an employee of the railway company.

As illustrated in Fig. 23, the ticketing machine terminal 43 includes a CPU 430, a RAM 431, a storage device 432, an input device 433, a display device 434, a first imaging device 435, a second imaging device 436, a ticketing device 437, and a communication unit 438. The CPU 430, the RAM 431, the storage device 432, the input device 433, the display device 434, the first imaging device 435, the second imaging device 436, the ticketing device 437 and the communication part 438 are connected to a bus line 439.

The CPU 430 operates by executing a program stored in the storage device 432 and functions as a control unit for controlling the operation of the entire ticketing machine terminal 43. The CPU 430 executes application programs stored in the storage device 432 to execute various processes as the ticketing machine terminal 43. The RAM 431 provides a memory area necessary for the operation of the CPU 430.

The storage device 432 is constituted of a storage medium such as a nonvolatile memory, a hard disk drive, or the like and functions as a storage unit. The storage device 432 stores programs executed by the CPU 430, data referred to by the CPU 430 when the programs are executed, and the like. The storage device 432 can store information input from the input device 433. The storage device 432 can store image data captured by the first imaging device 435 and the second imaging device 436.

The input device 433 functions as an input unit for receiving input from the user. The user can input various kinds of information or input instructions to execute processing to the ticketing machine terminal 43 via the input device 433. The input device 433 is, for example, a touch panel incorporated in the display device, a keyboard, or the like.

The display device 434 functions as a display unit for displaying various screens to the user. The display device 434 displays various screens in accordance with the control by the CPU 430.

The first imaging device 435 functions as a biometric information acquisition unit for capturing and acquiring a face image of the user as the biometric information of the user. The first imaging device 435 is, for example, an imaging device such as a digital camera capable of capturing a visible light region. The first imaging device 435 captures and acquires the face image of the user in accordance with the control by the CPU 430.

The second imaging device 436 functions as a biometric information acquisition unit for capturing and acquiring an iris image of the user as the biometric information of the user. The second imaging device 436 is, for example, an imaging device such as a digital camera capable of capturing a near-infrared light region. The second imaging device 436 may have an infrared illuminator for irradiating near-infrared light to an object to be captured. The second imaging device 436 captures and acquires the iris image of the user in accordance with the control by the CPU 430.

The first imaging device 435 and the second imaging device 436 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The ticketing device 437 issues the ticket purchased by the user in accordance with the control by the CPU 430.

The communication unit 438 is connected to the network NW4 and transmits and receives data via the network NW4. The communication unit 438 communicates with the management server 41 in accordance with the control by the CPU 430.

In addition to the configuration described above, the ticketing machine terminal 43 may include peripheral equipment (not shown) such as a cash processing machine and a card reader. With these peripheral devices, the ticketing machine terminal 43 can execute cash payment, payment by a traffic IC card or a credit card read by the ticketing machine terminal 43, or the like.

Thus, the ticketing machine terminal 43 is configured.

Next, the automatic ticket checker 44 will be described.

The automatic ticket checker 44 is a ticket gate terminal for confirming that the user is a passenger of a train capable of getting on from the ticket gate where the automatic ticket checker 44 is installed.

As illustrated in Fig. 23, the automatic ticket checker 44 includes a CPU 440, a RAM 441, a storage device 442, a display device 443, a gate 444, a first imaging device 445, a second imaging device 446, and a communication unit 447. The CPU 440, the RAM 441, the storage device 442, the display device 443, the gate 444, the first imaging device 445, the second imaging device 446, and the communication unit 447 are connected to a bus line 448.

The CPU 440 operates by executing a program stored in the storage device 442 and functions as a control unit for controlling the operation of the entire automatic ticket checker 44. The CPU 440 executes application programs stored in the storage device 442 to execute various processes as the automatic ticket checker 44. The RAM 441 provides a memory area necessary for the operation of the CPU 440.

The storage device 442 is constituted of a storage medium such as a nonvolatile memory, a hard disk drive, or the like and functions as a storage unit. The storage device 442 stores programs executed by the CPU 440, data referred to by the CPU 440 when the programs are executed, and the like. The storage device 442 can store image data captured by the first imaging device 445 and the second imaging device 446.

The display device 443 functions as a display unit for displaying various screens to the user. The display device 443 displays various screens in accordance with the control by the CPU 440.

The gate 444 shifts to an open state allowing the passage of the user or a closed state blocking the passage of the user in accordance with the control by the CPU 440 according to the success or failure of the identity verification of the user in the automatic ticket checker 44. The type of the gate 444 is, for example, a type of a flapper gate provided from one side or both sides of the passage and opened and closed by a flapper, a turn-style gate in which three bars rotate, or the like.

The first imaging device 445 functions as a biometric information acquisition unit for capturing and acquiring a face image of the user as biometric information of the user. The first imaging device 445 is, for example, an imaging device such as a digital camera capable of capturing a visible light region. The first imaging device 445 captures and acquires the face image of the user in accordance with the control by the CPU 440.

The second imaging device 446 functions as a biometric information acquisition unit for capturing and acquiring an iris image of the user as the biometric information of the user. The second imaging device 446 is, for example, an imaging device such as a digital camera capable of capturing a near-infrared light region. The second imaging device 446 may have an infrared illuminator for irradiating near-infrared light to an object to be captured. The second imaging device 446 captures and acquires the iris image of the user in accordance with the control by the CPU 440.

The first imaging device 445 and the second imaging device 446 need not to be devices separated from each other, and may be constituted by a single imaging device. As the single imaging device, an imaging device capable of acquiring a high resolution image such as a 4K camera or a camera having more than the number of pixels of the 4K camera can be used, as in the case of the first imaging device 135 and the second imaging device 136 in the first example embodiment.

The communication unit 447 is connected to the network NW4 and transmits and receives data via the network NW4. The communication unit 447 communicates with the management server 41 in accordance with the control by the CPU 440.

Thus, the automatic ticket checker 44 is constructed.

Hereinafter, the operation of each component in the information processing system 4 according to the present example embodiment will be described with reference to Fig. 24 to Fig. 28. As each component operates, an information processing method according to the present example embodiment is executed.

First, the operations of the user terminal 12 and the management server 41 during the provisional registration processing will be described with reference to Fig. 24 and Fig. 25. Fig. 24 is a sequence diagram illustrating the operations of the user terminal 12 and the management server 41 during the provisional registration processing. Fig. 25 is a schematic diagram illustrating an example of the provisional registration DB 4121.

Prior to undergoing the procedures at the ticket gate performed by the information processing system 4, the user obtains the railway company application by downloading or the like and stores it in the storage device 122 of the user terminal 12 in an executable manner. When executing the railway company application in the user terminal 12, the user can perform an opt-in process and allow the railway company to use the information about the user. In addition, instead of obtaining the railway company application by downloading or the like and executing the railway company application, the user can access the dedicated site by the web browser of the user terminal 12, or the like and perform the provisional registration processing of the same content as the case of using the railway company application.

The CPU 120 of the user terminal 12 on which the railway company application is executed functions as an acquisition unit, and acquires various kinds of information by accepting the user's input of various kinds of information such as personal information, payment means information, and nearest station information via the input device 123 (step S4102). The personal information and the payment method information are the same as those in the first example embodiment. The nearest station information is information on the nearest station ST closest to the user's residence or the station ST most frequently used by the user.

Further, the CPU 120 functions as an acquisition unit, and acquires a face image which is the biometric information of the user by capturing the face image of the user by the imaging device 125 (step S4104). Note that the CPU 120 can handle the face image itself captured by the imaging device 125 or the feature amount extracted from the face image as the face information which is the biometric information of the user. The CPU 120 can also read the fingerprint of the user by a fingerprint scanner (not shown) and acquire a fingerprint image or its feature amount as fingerprint information which is the biometric information of the user, in place of the face information or together with the face information.

Note that the CPU 120 may execute either of the steps S4102 and S4104 first regardless of whether the steps S4102 or S4104 is preceding or following, or may execute both of the steps S4102 and S4104 in parallel.

Next, the CPU 120 functions as a transmission unit, and transmits the user information including the personal information about the user, the payment means information, the nearest station information, and the face information acquired as described above to the management server 41 via the network NW4 (step S4106). When the fingerprint information is acquired as the biometric information of the user, the CPU 120 can transmit the user information including the fingerprint information in place of or along with the face information.

Thus, the user can apply for registration of the user information by himself or herself by transmitting the user information from the user terminal 12 held by himself or herself to the management server 41.

When the CPU 410 of the management server 41 receives and acquires the user information from the user terminal 12, the CPU 410 functions as a registration unit, and provisionally registers the acquired user information in the provisional registration DB 4121 (step S4108). At this time, the CPU 410 provisionally registers the user information in the nearest station-specific DB 4121d corresponding to the nearest station of the user based on the nearest station information included in the user information. Further, the CPU 410 provisionally registers various kinds of information included in the user information in the nearest station-specific DB 4121d in association with each other.

Note that the plurality of nearest station-specific DBs 4121d need not necessarily to be divided by nearest stations on one station basis, but may be divided by, for example, a multi-station basis, a station location basis, or the like.

Thus, the CPU 410 provisionally registers the pieces of the user information relating to the plurality of users in the plurality of nearest station-specific DB 4121d in accordance with the nearest station information.

Fig. 25 illustrates examples of the plurality of nearest station-specific DB 4121d in the provisional registration DB 4121 of the management server 41. As illustrated in the figure, the provisional registration DB 4121 includes the plurality of nearest station-specific DBs 4121d, which are divided by nearest stations specified by the nearest station information. In each nearest station-specific DB 4121d, the user information about each user is provisionally registered for each user ID that is an identifier for identifying the plurality of users. The user information provisionally registered in the nearest station-specific DB 4121d includes the personal information, the payment means information, the face information, nearest station information, and the like associated with each other. The provisionally registered user information may include the fingerprint information as the biometric information.

Next, the operations of the ticketing machine terminal 43 and the management server 41 during the registration processing will be described with reference to Fig. 26. Fig. 26 is a sequence diagram illustrating the operations of the ticketing machine terminal 43 and the management server 41 during the definitive registration processing. Fig. 27 is a schematic diagram illustrating an example of the definitive registration DB 4122.

The user whose user information has been provisionally registered in the provisional registration DB 4121 as described above goes to the station ST, which is the nearest station input in the nearest station information, and performs the definitive registration of the user information, and purchases a commuter pass, a normal train ticket, or the like. The user arriving at the station ST first moves to the ticketing area where the ticketing machine terminal 43 is installed.

In the ticketing machine terminal 43 which is an automatic ticketing machine terminal, whether or not the user is the user who has provisionally registered the user information is confirmed by the user's input via the input device 433, or the like. When it is confirmed that the user is the user who has provisionally registered the user information, the CPU 430 of the ticketing machine terminal 43 functions as an acquisition unit, and acquires a face image which is the biometric information of the user by capturing the face image of the user by the first imaging device 435 (step S4202). Note that the CPU 430 can handle the face image itself captured by the first imaging device 435 or the feature amount extracted from the face image as the face information which is the biometric information of the user. When the user information including the fingerprint information is provisionally registered, the CPU 430 reads the fingerprint of the user by a fingerprint scanner (not shown) and can acquire a fingerprint image or its feature amount as fingerprint information which is the biometric information of the user, in place of the face information or together with the face information.

Next, the CPU 430 functions as a transmission unit, and transmits the face information acquired via the first imaging device 435 to the management server 41 via the network NW4 (step S4204). When the fingerprint information is acquired as the biometric information of the user, the CPU 430 can transmit the user information including the fingerprint information in place of or along with the face information.

Further, the CPU 430 functions as an acquisition unit, and acquires an iris image which is the biometric information of the user by capturing the iris image of the user by the second imaging device 436 (step S4206). When the face image is captured and acquired by the first imaging device 435, the CPU 430 can capture and acquire the iris image by the second imaging device 436. More specifically, the CPU 430 can capture and acquire the iris image by the second imaging device 436 at the same time as or in parallel with capturing and acquiring the face image by the first imaging device 435. The CPU 430 can handle the iris image itself captured by the second imaging device 436 or the feature amount extracted from the iris image as the iris information which is the biometric information of the user. When acquiring the fingerprint information, the CPU 430 can acquire the iris information in parallel with the acquisition of the fingerprint information.

Thus, when the CPU 430 acquires the face information via the first imaging device 435, the CPU 430 also acquires the iris information via the second imaging device 436. Thus, the CPU 430 can efficiently acquire iris information.

Further, the CPU 430 functions as an acquisition unit, and receives the user's input of the telephone number via the input device 433 to acquire the telephone number (step S4208). The telephone number input here functions as a character string used for identity verification. In place of the telephone number, the CPU 430 may use another character string such as a date of birth, a password, a passphrase, or the like that can be uniquely input by the user. In this case, the user can provisionally register the user information including another character string in the nearest station-specific DB 4121d together with the telephone number or in place of the telephone number.

Next, the CPU 430 functions as a transmission unit, and transmits the telephone number acquired via the input device 433 to the management server 41 through the network NW4 (step S4210).

Note that the CPU 430 may execute either of the steps S4202 and S4208 first regardless of whether the steps S4202 or S4208 is preceding or following, or may execute both of the steps S4202 and S4208 in parallel. The CPU 430 can execute the step S4204 following the step S4202 and the step S4210 following the step S4208 at any timing.

On the other hand, the CPU 410 of the management server 41 functions as a matching unit, and executes matching of the face information received and acquired from the ticketing machine terminal 43 (step S4212). At this time, the CPU 410 matches the target face information, which is the face information acquired from the ticketing machine terminal 43, by 1:N with the plurality of registered face information, which is the face information provisionally registered in the nearest station-specific DB 4121d corresponding to the nearest station of the user. The CPU 410 can calculate a matching score corresponding to the similarity between the target face information and the registered face information by matching the feature amount extracted from the face image in matching of the face information. As a result of the matching of the face information, the CPU 410 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 410 can execute matching of the fingerprint information in place of the matching of the face information or together with the matching of the face information.

In the present example embodiment, the CPU 410 matches the target face information with the plurality of face information provisionally registered in the nearest station-specific DB 4121d corresponding to the nearest station of the user as a population among the plurality of nearest station-specific DBs 4121d. Thus, in the present example embodiment, the population for the matching of the face information is narrowed down by the nearest station in accordance with the nearest station information associated with the face information of the user or the like, so that the face information can be efficiently matched with high accuracy.

Next, the CPU 410 functions as a matching unit, and executes matching of the telephone number received and acquired from the ticketing machine terminal 43 (step S4214). At this time, the CPU 410 matches the telephone numbers acquired from the ticketing machine terminal 43 with the plurality of telephone numbers provisionally registered in the nearest station-specific DB 4121d and associated with the upper plurality of pieces of registered face information identified in the step S4212.

Next, the CPU 410 functions as a determination unit, and determines whether the identity verification of the user has succeeded or failed based on matching result of the face information and matching result of the telephone number (step S4216). That is, when the CPU finds a telephone number matching the telephone number acquired from the ticketing machine terminal 43 in a plurality of telephone numbers associated with the upper plurality of pieces of registered face information, the CPU 410 determines that the identity verification has been successful by matching coincide of the face information and matching coincide of the telephone number. On the other hand, when the CPU 410 does not find any telephone number matching the telephone number acquired from the ticketing machine terminal 43 in the plurality of telephone numbers associated with the upper plurality of pieces of registered face information, the CPU 410 determines that the identity verification has failed due to mismatch of the telephone number.

In the present example embodiment, since not only the matching of the face information, but also the matching of the telephone number are used to verify the identity of the user, it is possible to verify the identity of the user more reliably. However, it is not necessary to perform the matching of the character string such as the telephone number, or the like. In this case, the identity can be verified by performing matching of the biometric information such as the face information, or the like.

Note that, for example, when the CPU 410 cannot find the registered face information whose matching score with the target face information is higher than or equal to a predetermined threshold value, the CPU 410 can also determine that the identity verification has failed due to mismatch of the face information without performing matching of the telephone number.

When the CPU 410 determines that the identification has succeeded (step S4216, YES), the CPU 410 identifies, as the target user information, the user information of the user for the purpose of definitive registration from the nearest station-specific DB 4121d (step S4218). The target user information identified by the CPU 410 is the user information including the face information of any of the upper plurality of pieces of registered face information in the order of higher similarity to the target face information and the telephone number matching the telephone number acquired from the ticketing machine terminal 43.

After the identification of the target user information or when the CPU 410 determines that the identity verification has failed (step S4216, NO), the CPU 410 functions as a transmission unit, and transmits determination result information indicating the determination result of the identity verification to the ticketing machine terminal 43 via the network NW4 (step S4220). The determination result information indicates whether the identity verification has succeeded or has failed. Further, when the identity verification of the user has succeeded and the target user information is identified, the CPU 410 transmits all or part of the target user information together with the determination result information to the ticketing machine terminal 43 via the network NW4. The CPU 410 can include, for example, the personal information, the face information which is a face image, and the like as a part of the target user information to be transmitted.

When the CPU 430 of the ticketing machine terminal 43 receives and acquires the determination result information from the management server 41, the CPU 430 functions as a determination unit, and determines whether the determination result information indicates that the identity verification has succeeded or has failed (step S4222).

When the CPU 430 determines that the determination result information indicates that the identity verification has failed (step S4222, NO), the CPU 430 executes a corresponding processing for the user (step S4224). As the corresponding processing, the CPU 430 can cause the display device 434 to display, for example, a screen for urging the user to re-execute the provisional registration processing using the user terminal 12, a screen for guiding the user to register the user information at the manned window, or the like.

On the other hand, when the CPU determines that the determination result information indicates that the identity verification has succeeded (step S4222, YES), the CPU 430 displays the personal information among the target user information on the display device 434 (step S4226). The CPU 430 can also display the face image in the target user information.

The user can confirm whether or not the personal information, the face image or the like displayed on the display device 434 belongs to the user himself or herself. The user can input, via the input device 433, an input indicating whether or not the user has confirmed that the personal information, the face image, or the like belongs to the user himself or herself to the ticketing machine terminal 43.

Next, the CPU 430 functions as a determination unit, and determines whether or not the user has confirmed that the personal information, the face image, or the like belongs to the user himself or herself based on the input via the input device 433 (step S4228) .

When the CPU 430 determines that no confirmation has been made (step S4228, NO), the CPU 430 executes the same corresponding processing as described above (step S4224).

On the other hand, when the CPU 430 determines that the confirmation has been made (step S4228, YES), the CPU 430 functions as a transmission unit, and transmits the iris information acquired in the step S4206 to the management server 41 via the network NW4 (step S4230).

Further, the CPU 430 executes the process of selling the ticket desired by the user in accordance with the purchase instruction of the ticket input by the user via the input device 433 or the like (step S4232). The CPU 430 can settle the fare of the ticket by, for example, cash payment, credit card payment or the like. The CPU 430 generates ticket information which is information related to the ticket purchased by the user by ticket selling processing. The ticket information is information related to the ticket such as the type of a commuter ticket, an ordinary ticket, or the like, the section, the effective date, the effective period, and the like.

The CPU 430 can sell the ticket without issuing the ticket printed on a medium such as paper by the ticketing device 437 in the ticket selling processing. As described later, the user can pass through the ticket gate without receiving a ticket gate printed on a medium such as paper.

Next, the CPU 430 transmits the generated ticket information to the management server 41 via the network NW4 (step S4234).

When the CPU 410 of the management server 41 receives and acquires the iris information and the ticket information from the ticketing machine terminal 43, the CPU 410 functions as a registration unit, adds the iris information and the ticket information to the target user information, and registers the target user information in the definitive registration DB 4122 (step S4236). At this time, the CPU 410 registers the iris information and the ticket information added to the target user information in association with other information included in the target user information. Thus, the CPU 410 associates the face information and the iris information with each other according to the matching result of the face information and the telephone number, and registers the user information including the face information and the iris information in the definitive registration DB 4122.

In the present example embodiment, the iris information required to be acquired by using a dedicated imaging device capable of capturing a near-infrared light region is acquired and registered in the ticketing machine terminal 43. On the other hand, the face information is transmitted from the user terminal 12 different from the ticketing machine terminal 43 to the management server 41 and registered before the registration of the iris information. Therefore, in the present example embodiment, as described later, it is possible to efficiently acquire and register the face information and the iris information which are a plurality of pieces of biometric information used for the biometric authentication.

Fig. 27 illustrates an example of the definitive registration DB 4122 of the management server 41. As illustrated in the figure, the user information about each user is registered in the definitive registration DB 4122 for each user ID that is an identifier for identifying the plurality of users. The user information registered in the definitive registration DB 4122 includes the personal information, the payment means information, the face information, the iris information, the nearest station information, the ticket information and the like associated with each other. The registered user information may include the fingerprint information as the biometric information.

In the above description, the case where the CPU 410 of the management server 41 performs the matching of the face information and the matching of the telephone number during the definitive registration of the user information has been described, but the example embodiment is not limited thereto. For example, the CPU 430 of the ticketing machine terminal 43 may have a function of performing the matching of the face information and the matching of the telephone number, and a function of performing the identity verification based on the matching results. In this case, the CPU 430 can refer to the provisional registration DB 4121 of the management server 41 via the network NW4, for example.

Next, the operations of the automatic ticket checker 44 and the management server 41 during the procedure at the ticket gate will be described with reference to Fig. 28. Fig. 28 is a sequence diagram illustrating the operations of the automatic ticket checker 44 and the management server 41 during the procedure at the ticket gate.

The user who has completed the processing at the ticketing machine terminal 43 heads for the ticket gate of the station ST in the riding section, for example, during the valid period of the purchased commuter pass, on the valid day of the purchased ordinary ticket, or the like. At the ticket gate, the user gets on a train by passing through the automatic ticket checker 44 operated as follows.

The CPU 440 of the automatic ticket checker 44 determines whether or not a user standing in front of the automatic ticket checker 44 is detected (step S4302). The CPU 440 can detect the user standing in front of the automatic ticket checker 44 by, for example, the first imaging device 445 constantly capturing in front of the automatic ticket checker 44, a human sensor (not shown), or the like. The CPU 440 waits until the user is detected (step S4302, NO).

When the CPU 440 determines that the user has been detected (step S4302, YES), the CPU 440 functions as an acquisition unit, and acquires a face image which is the biometric information of the user by capturing the face image of the user by the first imaging device 445 (step S4304). Note that the CPU 440 can handle the face image itself captured by the first imaging device 445 or the feature amount extracted from the face image as the face information which is the biometric information of the user. When the user information including the fingerprint information is definitively registered, the CPU 440 reads the fingerprint of the user by a fingerprint scanner (not shown) and can acquire a fingerprint image or its feature amount as fingerprint information which is the biometric information of the user, in place of the face information or together with the face information.

Further, the CPU 440 functions as an acquisition unit, and acquires an iris image which is the biometric information of the user by capturing the iris image of the user by the second imaging device 446 (step S4306). The CPU 440 can handle the iris image itself captured by the second imaging device 446 or the feature amount extracted from the iris image as iris information which is the biometric information of the user.

Note that the CPU 440 may execute either of the steps S4304 and S4306 first regardless of whether the steps S4304 or S4306 is preceding or following, or may execute both of the steps S4304 and S4306 in parallel.

Next, the CPU 440 functions as a transmission unit, and transmits the face information acquired via the first imaging device 445 and the iris information acquired via the second imaging device 446 to the management server 41 via the network NW4 (step S4308). When the fingerprint information has been acquired, the CPU 440 can transmit the fingerprint information in place of the face information or together with the face information.

On the other hand, the CPU 410 of the management server 41 functions as a matching unit, and executes matching of the face information received and acquired from the automatic ticket checker 44 (step S4310) . At this time, the CPU 410 matches the target face information, which is the face information acquired from the automatic ticket checker 44, by 1:N with the plurality of registered face information, which is the face information registered in the definitive registration DB 4122. The CPU 410 can calculate a matching score corresponding to the similarity between the target face information and the registered face information by matching the feature amount extracted from the face image in matching of the face information. As a result of the matching of the face information, the CPU 410 identifies an upper plurality of pieces of registered face information equal to and higher than a predetermined rank in the order of higher similarity to the target face information, for example, the pieces of the registered face information of the upper ranks from the first to the tenth.

When the fingerprint information is acquired in place of the face information or together with the face information, the CPU 410 can execute matching of the fingerprint information in place of the matching of the face information or together with the matching of the face information.

The CPU 410 functions as a matching unit, and executes matching of the iris information received and acquired from the automatic ticket checker 44 (step S4312). At this time, the CPU 410 matches the target iris information, which is the iris information acquired from the automatic ticket checker 44, by 1:N with the plurality of registered iris information, which is the iris information registered in the definitive registration DB 4122 . The CPU 410 can calculate a matching score corresponding to the similarity between the target iris information and the registered iris information by matching the feature amount extracted from the iris information in matching of the iris information. As a result of matching of the iris information, the CPU 410 identifies an upper plurality of pieces of registered iris information equal to and higher than a predetermined rank in the order of higher similarity to the target iris information, for example, the pieces of the registered iris information of the upper ranks from the first to the tenth.

Note that the CPU 410 may execute either of the steps S4310 and S4312 first regardless of whether the steps S4310 or S4312 is preceding or following, or may execute both of the steps S4310 and S4312 in parallel.

Next, the CPU 410 functions as a determination unit, and determines whether or not the identity verification of the user has succeeded based on the matching result of the face information and the matching result of the iris information (step S4314). That is, when the CPU 410 finds the user information including both of any of the upper plurality of pieces of registered face information and any of the upper plurality of pieces of registered iris information in the definitive registration DB 4122, the CPU 410 determines that the identity verification has been succeeded by matching coincidence of both the face information and the iris information. On the other hand, when the CPU 410 does not find the user information including both of any of the upper plurality of pieces of registered face information and any of the upper plurality of pieces of registered iris information, the CPU 410 determines that the identity verification has failed due to mismatch of at least one of the face information and the iris information.

When the CPU 410 determines that the identity verification has succeeded by matching of the face information and the iris information, the CPU 410 further determines whether or not the user has the qualification to ride the train to be ridden from the ticket gate based on the ticket information, or the like included in the discovered user information. As a result, even when the CPU 410 determines that the passenger does not have the boarding qualification, the CPU 410 treats this case as if the identity verification has failed.

Thus, the CPU 410 executes the identity verification of the user by the biometric authentication using the face information and the iris information which are the plurality of biometric information of the user. In the present example embodiment, since the biometric authentication is performed using the plurality of pieces of biometric information, the biometric authentication with high accuracy can be realized even if the number of pieces of user information registered in the definitive registration DB 4122 is enormous. In particular, in the present example embodiment, since the iris information with higher matching accuracy as well as the face information is used for the biometric authentication, the biometric authentication with higher accuracy can be realized.

In the present example embodiment, since the iris information, which is difficult to impersonate by a counterfeit, is used for the biometric authentication, safer biometric authentication can be realized without liveness detection.

Next, the CPU 410 functions as a transmission unit, and transmits determination result information indicating the determination result of the identity verification to the automatic ticket checker 44 via the network NW4 (step S4316). The determination result information indicates whether the identity verification has succeeded or has failed, and the case where the identity verification failed includes a case where the person is not qualified to ride.

When the CPU 440 of the automatic ticket checker 44 receives and acquires the determination result information from the management server 41, the CPU 440 determines whether the determination result information indicates that the identification has succeeded or has failed (step S4318).

When the CPU 440 determines that the determination result information indicates that the identity verification has succeeded (step S4318, YES), the CPU 440 causes the gate 444 to shift to an open state allowing the passage of the user (step S4320). In this case, the CPU 440 may shift the gate 444 from a closed state that blocks the passage of the user during standby to the open state, or may maintain the open state during standby. The user passes through the open gate 444, passes through the automatic ticket checker 44, and passes through the ticket gate to board the train.

On the other hand, when the CPU 440 determines that the determination result information indicates that the identification has failed (step S4318, NO), the CPU 440 causes the gate 444 to shift to a closed state that blocks the passage of the user (step S4322). In this case, the CPU 440 may maintain the closed state in the standby state as it is, or may shift the gate 444 from an open state in the standby state to the closed state. In this case, the CPU 440 can execute corresponding processing such as, for example, a process for causing the display device 443 to display a notification requesting confirmation to the user, a process for calling an attendant, or the like.

Thus, according to the present example embodiment, while the iris information is acquired and registered by the ticketing machine terminal 43, the face information is transmitted from the user terminal 12 to the management server 41 and registered before the iris information is registered. Therefore, according to the present example embodiment, the face information and the iris information can be efficiently acquired and registered.

Further, in the present example embodiment, since the biometric authentication is performed using the plurality of pieces of biometric information, the biometric authentication with high accuracy can be realized even if the number of pieces of user information registered in the definitive registration DB 4122 is enormous.

In the above description, the case where the biometric authentication is used for the procedure at the ticket gate where the automatic ticket checker 44 is installed has been described, but the example embodiment is not limited thereto. For example, when shopping at a kiosk or the like in the premises of the station ST, identification by biometric authentication can be performed as described above. In addition, for shopping at a kiosk or the like, payment processing can be executed in the same manner as in the case of the first example embodiment based on the payment means information registered in the user information.

In the above description, the case where the CPU 410 of the management server 41 performs the matching of the face information and the matching of the iris information in the procedure at the ticket gate has been described, but the example embodiment is not limited thereto. For example, the CPU 440 of the automatic ticket checker 44 may have a function of performing the matching of the face information and the matching of the iris information, and a function of performing the identity verification based on the matching results. In this case, the CPU 440 can refer to the definitive registration DB 4122 of the management server 41 via the network NW4, for example.

### [Another Example Embodiment]

According to another example embodiment, the information processing system described above in example embodiment may be configured as illustrated in Fig. 29. Fig. 29 is a block diagram illustrating the configuration of an information processing apparatus according to another example embodiment.

As illustrated in Fig. 29, the information processing system 1000 of another example embodiment includes a registration unit 1002 that registers a first biometric information acquired by a first terminal, and an acquisition unit 1004 that acquires a target biometric information to be matched with the first biometric information. The registration unit 1002 registers a second biometric information acquired by a second terminal different from the first terminal when the target biometric information is acquired in association with the first biometric information according to matching result of the target biometric information with the first biometric information.

According to information processing system 1000 according to another example embodiment, since the first biometric information is registered before the registration of the second biometric information, a plurality of biometric information capable of realizing highly accurate biometric authentication can be efficiently registered.

### [Deformation Example Embodiments]

This disclosure is not limited to the example embodiments described above, and various modifications are possible.

For example, the above example embodiments have been described with reference to the cases where the face information and the iris information are acquired by using the imaging devices, but the example embodiment is not limited thereto. It is possible to acquire biometric information by using a device corresponding to the biometric information of a user to be acquired.

The above example embodiments have been described with reference to the cases where specific information such as the personal information is registered as the user information, but the example embodiment is not limited thereto. As the user information, various information related to the user can be registered.

The above example embodiments have been described with reference to the cases where the identity verification is performed based on the matching result of the face information and the iris information which are a plurality of pieces of biometric information, but the example embodiment is not limited thereto. The identity verification can also be performed based on the matching result of either the face information or the iris information. For example, when it is difficult to acquire the face information, the identity verification can be performed based on the matching result of the iris information which is a single biometric information.

Further, the management servers 11, 21, 31, and 41 of the above example embodiments can be configured as a system comprising one or more devices, respectively. The shop terminal 13, the check-in terminal 23, the examination terminal 33, and the ticketing machine terminal 43 of the above example embodiments can be configured as a system comprising one or more devices, respectively. The boarding gate apparatus 24, the kiosk terminal 34, and the automatic ticket checker 44 of the above example embodiment can be configured as a system comprising one or more devices, respectively.

Further, the scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the computer program described above is stored but also the computer program itself.

As the storage medium, for example, a floppy (registered trademark) disk, a hard disk, an optical disk, a magneto-optical disk, a Compact Disc-Read Only Memory (CD-ROM), a magnetic tape, a nonvolatile memory card, or a ROM can be used. Further, the scope of each of the example embodiments includes an example that operates on Operating System (OS) to perform a process in cooperation with another software or a function of an add-in board without being limited to an example that performs a process by an individual program stored in the storage medium.

The whole or part of the example embodiments disclosed above, can be described as, but not limited to, the following supplementary notes.

### (Supplementary note 1)

An information processing system comprising:
a registration unit that registers a first biometric information acquired by a first terminal; and
an acquisition unit that acquires a target biometric information to be matched with the first biometric information,
wherein the registration unit registers a second biometric information acquired by a second terminal different from the first terminal when the target biometric information is acquired in association with the first biometric information according to matching result of the target biometric information with the first biometric information.

### (Supplementary note 2)

The information processing system according to supplementary note 1,
wherein the second terminal acquires the target biometric information and the second biometric information.

### (Supplementary note 3)

The information processing system according to supplementary note 2,
wherein the second terminal acquires the second biometric information in parallel with acquiring the target biometric information.

### (Supplementary note 4)

The information processing system according to any one of supplementary notes 1 to 3,
wherein the registration unit registers a plurality of pieces of the first biometric information of a plurality of users, and registers the second biometric information in association with the first biometric information according to a matching result of the target biometric information with the plurality of pieces of the first biometric information.

### (Supplementary note 5)

The information processing system according to supplementary note 4,
wherein the registration unit registers the second biometric information in association with the first biometric information according to a matching result of the target biometric information with a part of the plurality of pieces of the first biometric information.

### (Supplementary note 6)

The information processing system according to supplementary note 5,
wherein the part of the plurality of pieces of the first biometric information is narrowed down based on information associated with the first biometric information.

### (Supplementary note 7)

The information processing system according to supplementary note 6,
wherein the information associated with the first biometric information is transmitted from the first terminal to the registration unit together with the first biometric information.

### (Supplementary note 8)

The information processing system according to any one of supplementary notes 1 to 7,
wherein the registration unit registers a character string in association with the first biometric information, and registers the second biometric information in association with the first biometric information according to a matching result of the character string input to the second terminal with the registered character string.

### (Supplementary note 9)

The information processing system according to any one of supplementary notes 1 to 8, further comprising:
a first matching unit that performs matching of the target biometric information with the first biometric information.

### (Supplementary note 10)

The information processing system according to any one of supplementary notes 1 to 9, further comprising:
a second matching unit that performs matching of the first biometric information and the second biometric information acquired by a third terminal with the registered first biometric information and the second biometric information, respectively.

### (Supplementary note 11)

The information processing system according to any one of supplementary notes 1 to 10,
wherein the registration unit registers the first biometric information in association with information about the user whose first biometric information has been acquired.

### (Supplementary note 12)

The information processing system according to supplementary note 10,
wherein the information about the user includes information about a payment means used by the user for payment.

### (Supplementary note 13)

The information processing system according to supplementary note 12, further comprising:
a payment processing unit that executes payment processing based on the information about the payment means.

### (Supplementary note 14)

The information processing system according to supplementary note 13,
wherein the payment processing unit cannot execute the payment processing when the first biometric information among the first biometric information and the second biometric information is registered, and can execute the payment processing based on matching result of the first biometric information and the second biometric information after a point when the second biometric information is registered in association with the first biometric information.

### (Supplementary note 15)

The information processing system according to supplementary note 13,
wherein the payment processing unit can execute the payment processing based on matching result of the first biometric information and the character string when the first biometric information among the first biometric information and the second biometric information is registered, and can execute the payment processing based on matching result of the first biometric information and the second biometric information after a point when the second biometric information is registered in association with the first biometric information.

### (Supplementary note 16)

The information processing system according to any one of supplementary notes 1 to 15,
wherein the first terminal is a terminal held by the user, the first biometric information of whom has been acquired.

### (Supplementary note 17)

The information processing system according to any one of supplementary notes 1 to 16,
wherein the first biometric information is face information, and
wherein the second biometric information is iris information.

### (Supplementary note 18)

An information processing method comprising:
registering a first biometric information acquired by a first terminal; and
acquiring a target biometric information to be matched with the first biometric information,
wherein the registering registers a second biometric information acquired by a second terminal different from the first terminal when the target biometric information is acquired in association with the first biometric information according to matching result of the target biometric information with the first biometric information.

### (Supplementary note 19)

A storage medium storing a program that causes a computer to perform:
registering a first biometric information acquired by a first terminal; and
acquiring a target biometric information to be matched with the first biometric information,
wherein the registering registers a second biometric information acquired by a second terminal different from the first terminal when the target biometric information is acquired in association with the first biometric information according to matching result of the target biometric information with the first biometric information.

As described above, although this disclosure has been described with reference to the example embodiments, this disclosure is not limited to the example embodiments described above. Various modifications that may be understood by those skilled in the art can be made to the configuration or details of this disclosure within the scope of this disclosure.

### [Reference Signs List]

- 1, 2, 3, 4: information processing systems
- 12: user terminal
- 13: shop terminal
- 23: check in terminal
- 24: boarding gate apparatus
- 33: examination terminal
- 34: kiosk terminal
- 43: ticket vending machine
- 44: automatic ticket checker

## Claims

1. An information processing system comprising:
a registration unit that registers a first biometric information acquired by a first terminal; and
an acquisition unit that acquires a target biometric information to be matched with the first biometric information,
wherein the registration unit registers a second biometric information acquired by a second terminal different from the first terminal when the target biometric information is acquired in association with the first biometric information according to matching result of the target biometric information with the first biometric information.

2. The information processing system according to claim 1,
wherein the second terminal acquires the target biometric information and the second biometric information.

3. The information processing system according to claim 2,
wherein the second terminal acquires the second biometric information in parallel with acquiring the target biometric information.

4. The information processing system according to any one of claims 1 to 3,
wherein the registration unit registers a plurality of pieces of the first biometric information of a plurality of users, and registers the second biometric information in association with the first biometric information according to a matching result of the target biometric information with the plurality of pieces of the first biometric information.

5. The information processing system according to claim 4,
wherein the registration unit registers the second biometric information in association with the first biometric information according to a matching result of the target biometric information with a part of the plurality of pieces of the first biometric information.

6. The information processing system according to claim 5,
wherein the part of the plurality of pieces of the first biometric information is narrowed down based on information associated with the first biometric information.

7. The information processing system according to claim 6,
wherein the information associated with the first biometric information is transmitted from the first terminal to the registration unit together with the first biometric information.

8. The information processing system according to any one of claims 1 to 7,
wherein the registration unit registers a character string in association with the first biometric information, and registers the second biometric information in association with the first biometric information according to a matching result of the character string input to the second terminal with the registered character string.

9. The information processing system according to any one of claims 1 to 8, further comprising:
a first matching unit that performs matching of the target biometric information with the first biometric information.

10. The information processing system according to any one of claims 1 to 9, further comprising:
a second matching unit that performs matching of the first biometric information and the second biometric information acquired by a third terminal with the registered first biometric information and the second biometric information, respectively.

11. The information processing system according to any one of claims 1 to 10,
wherein the registration unit registers the first biometric information in association with information about the user whose first biometric information has been acquired.

12. The information processing system according to claim 10,
wherein the information about the user includes information about a payment means used by the user for payment.

13. The information processing system according to claim 12, further comprising:
a payment processing unit that executes payment processing based on the information about the payment means.

14. The information processing system according to claim 13,
wherein the payment processing unit cannot execute the payment processing when the first biometric information among the first biometric information and the second biometric information is registered, and can execute the payment processing based on matching result of the first biometric information and the second biometric information after a point when the second biometric information is registered in association with the first biometric information.

15. The information processing system according to claim 13,
wherein the payment processing unit can execute the payment processing based on matching result of the first biometric information and the character string when the first biometric information among the first biometric information and the second biometric information is registered, and can execute the payment processing based on matching result of the first biometric information and the second biometric information after a point when the second biometric information is registered in association with the first biometric information.

16. The information processing system according to any one of claims 1 to 15,
wherein the first terminal is a terminal held by the user, the first biometric information of whom has been acquired.

17. The information processing system according to any one of claims 1 to 16,
wherein the first biometric information is face information, and
wherein the second biometric information is iris information.

18. An information processing method comprising:
registering a first biometric information acquired by a first terminal; and
acquiring a target biometric information to be matched with the first biometric information,
wherein the registering registers a second biometric information acquired by a second terminal different from the first terminal when the target biometric information is acquired in association with the first biometric information according to matching result of the target biometric information with the first biometric information.

19. A storage medium storing a program that causes a computer to perform:
registering a first biometric information acquired by a first terminal; and
acquiring a target biometric information to be matched with the first biometric information,
wherein the registering registers a second biometric information acquired by a second terminal different from the first terminal when the target biometric information is acquired in association with the first biometric information according to matching result of the target biometric information with the first biometric information.
